# EUROPÄISCHE PATENTSCHRIFT

(11) **EP 4 591 002 B1**
(45) Veröffentlichungstag und Bekanntmachung des Hinweises auf die Patenterteilung: **04.11.2026**
(21) Anmeldenummer: 23777189.4
(22) Anmeldetag: 22.09.2023
(51) Int. Cl.: F21S 41/143, F21S 41/20, F21S 41/255, F21S 41/265, G02B 3/00, G02B 19/00, F21W 102/155

(54) **STRAHLFORMENDE OPTIK UND ABBLENDLICHTSCHEINWERFER**
BEAM-FORMING OPTICS AND LOW BEAM HEADLIGHT
OPTIQUE DE FORMATION DE FAISCEAU ET PHARE DE CROISEMENT

(30) Priorität: 23.09.2022 DE 102022210092
(43) Veröffentlichungstag der Anmeldung: 30.07.2025
(73) Patentinhaber: Fraunhofer-Gesellschaft zur Förderung der angewandten Forschung e.V., 80686 München (DE); Friedrich-Schiller-Universität Jena, 07743 Jena (DE)
(72) Erfinder: WILHELM, Leo Maximilian, 07743 Jena (DE); SCHREIBER, Peter, 07745 Jena (DE); STEFANIDI, Dmitrii, 07743 Jena (DE)
(74) Vertreter: König, Andreas Rudolf
(86) Internationale Anmeldenummer: PCT/EP2023/076268
(87) Internationale Veröffentlichungsnummer: WO 2024/062108

(56) Entgegenhaltungen:
- EP-A1- 0 738 903
- EP-A1- 3 499 115
- EP-A1- 4 040 040
- WO-A1-2020/030573
- WO-A1-2020/074523
- WO-A1-2021/151711
- DE-A1- 102020 126 716
- JP-A- 2021 189 306
- US-A1- 2015 252 975
- US-A1- 2019 301 699
- US-A1- 2020 332 977
- US-A1- 2021 215 314

## Beschreibung

Die vorliegende Erfindung bezieht sich auf Ausgestaltungen von strahlformenden Optiken und von Abblendlichtscheinwer-

fern, insbesondere für Kraftfahrzeuge sowie auf Kraftfahrzeuge mit einem solchen Abblendlichtscheinwerfer. Wesentliche Merkmale der Intensitätsverteilung eines Abblendlichts für Kraftfahrzeuge sind eine in horizontaler Richtung annähernd symmetrische Verteilung mit einer vollen Divergenz von ca. +/-30° und einer Halbwertsbreite von ca. 8...10° sowie eine asymmetrischen vertikale Verteilung im Bereich von ca. -12°...0° mit einer Halbwertsbreite von ca. 2...3° und einer nach oben scharfen Hell-Dunkelgrenze mit hohem Kontrast zur Vermeidung der Blendung entgegenkommender Fahrzeuge sowie einem sanften Abfall der Helligkeit nach unten hin.

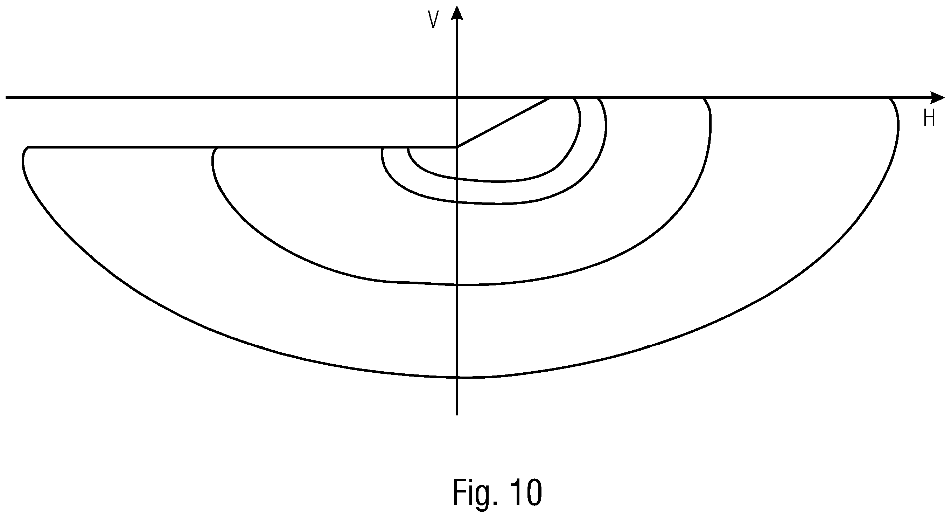

Fig. 10 zeigt die Hell-Dunkelgrenze gesehen in Fahrtrichtung rechts bei Rechtsverkehr. Sie formt rechts eine Horizontale etwa auf dem Horizont und links etwas darunter. In der zentralen "Ellenbogen-Schulterregion" werden diese beiden Horizontalen durch eine ansteigende Linie verbunden. Das Maximum der Lichtverteilung befindet sich rechts von der vertikalen Achse, unterhalb des Horizonts.

Die Erzeugung dieser komplexen Intensitätsverteilung erfordert große Scheinwerfersysteme mit vergleichsweise geringer Transmission. Die Hell-Dunkelgrenze wird durch Abbildung einer von einer strahlgeformten Lichtquelle (üblicherweise LED oder Halogenleuchte) beleuchteten, entsprechend geformten Blende erzeugt. Diese Blende verringert die Systemtransmission.

Eine, diesem Designansatz entsprechende mehrkanalige, mikrooptische Realisierung unter Nutzung von Linsenarrays wurde in [1] offengelegt: Als Lichtquelle dienen mehrere individuell kollimierte LEDs, die ein Kondensor-Mikrolinsenarray (Eingangsarray), gefolgt von Blendenarray und Projektions-linsenarray (Ausgangsarray) beleuchten. Durch den Übergang von der konventionellen Einzelaperturoptik zu einer Multiaperturoptik kann die Brennweite der Projektionsoptiken und damit die Baulänge des Scheinwerfers stark verkürzt werden. Die Begrenzung der Systemtransmission durch das Blendenarray bleibt aber bestehen. Weiter sorgen die absorbierenden Blenden für einen merklichen Wärmeeintrag in die Mikrooptik.

Eine alternative Variante [2] basiert auf Strahlformung durch irreguläre, mikrooptische Wabenkondensoren (WaKo) [3,4]: Hier werden drei nebeneinander angeordnete WaKos von einer in vertikaler Richtung kollimierten Lichtquelle beleuchtet. Die drei Mikrolinsenarrays sind jeweils für die Beleuchtung des linken (Hell-Dunkelgrenze unter dem Horizont), zentralen (Ellbogen-Schulterregion) und rechten (Hell-Dunkelgrenze auf dem Horizont) Bereichs des Fernfelds zuständig. Vorzugsweise werden das linke und rechte Array als Zylinderlinsen-WaKos und das zentrale Array mit sphärischen, rechteckig berandeten Lenslets mit vergrabenen Blenden zur Erzeugung der Ellbogen-Schulterverteilung ausgelegt. Nachteilig bei diesem Systemlayout sind:
- die nach Ausführung [2] im zentralen Bereich immer noch vorhandenen, residualen Blenden,
- ein in der blendenlosen Ausführung [2] auftretendes vertikal unscharfes Abbild der Hell-Dunkel-Grenze der Ellbogen-Schulterregion innerhalb der Lichtverteilung unterhalb des Hotspots,
- Störlichtartefakte, die an den Stoßstellen zwischen benachbarten WaKos entstehen sowie
- die nur eingeschränkte Steuerbarkeit der horizontalen Intensitätsverteilung in den Außenbereichen rechts und links ausschließlich durch die horizontale Fernfeldverteilung der kollimierte Lichtquelle.

Im WO2020074523 A1 wird ein Abblendlichtscheinwerfer beschrieben, der mit einer geringen Baulänge und einer hohen Licht-/Energieausbeute erzielt werden kann. Eine Lichtquellenanordnung ist vorgesehen, die einen Lichtkegel aus Licht erzeugt, das in einer ersten Transversalrichtung weniger divergent ist als in einer zu der ersten Transversalrichtung senkrechten zweiten Transversalrichtung, und diese Lichtquellenanordnung wird zur Ausleuchtung von drei entlang der zweiten Transversalrichtung nebeneinander angeordneten Linsenarrays verwendet, die somit eingangsseitig jeweils von einem zugeordneten unter in der zweiten Transversalrichtung nebeneinander angeordneten Segmenten des Lichtkegels durchstrahlt werden und ausgangsseitig Abblendlicht mit einer gegenüber dem Lichtkegel veränderten Lichtstärkewinkelverteilung ausgeben.Ferner offenbart.

WO2020030573 A1 eine Projektionseinrichtung für ein Lichtmodul eines Kraftfahrzeugscheinwerfers, die aus einer Vielzahl matrixartig angeordneter Mikro-Optiksysteme gebildet ist, wobei jedes Mikro-Optiksystem eine Mikro-Eintrittsoptik, eine der Mikro-Eintrittsoptik zugeordnete Mikro-Austrittsoptik und eine Mikro-Blende aufweist, wobei alle Mikro-Eintrittsoptiken eine Eintrittsoptik, alle Mikro-Austrittsoptiken eine Austrittsoptik und alle Mikro-Blenden eine Blendenvorrichtung bilden, wobei die Blendenvorrichtung in einer im Wesentlichen zur Hauptabstrahlrichtung der Projektionseinrichtung orthogonal stehenden Ebene angeordnet ist und die Eintrittsoptik, die Austrittsoptik und die Blendenvorrichtung in im Wesentlichen zueinander parallelen Ebenen angeordnet sind, wobei die Mikro-Blende eines jeden Mikro-Optiksystems eine optisch wirksame Kante aufweist, wobei die Gesamtheit der Mikro-Optiksysteme in zumindest zwei Mikro-Optiksystem-Gruppen unterteilt ist, wobei bei den Mikro-Optiksystemen aus unterschiedlichen Mikro-Optiksystem-Gruppen die optisch wirksamen Kanten relativ zu den jeweiligen Mikro-Austrittsoptiken innerhalb der Zwischenbildebene unterschiedlich positioniert sind.

Ausgehend von den obigen Ausführungen besteht ein Bedarf, eine Möglichkeit zu schaffen die oben genannten Nachteile zu vermeiden und ein scharfes Abbild der Hell-Dunkel-Grenze in guter Qualität zu ermöglichen, die auf die Verwendung einer Blende nicht angewiesen ist.

Die Aufgabe der vorliegenden Erfindung besteht deshalb darin, eine Möglichkeit zu schaffen, eine Hell-Dunkel-Grenze bei Abblendlichtscheinwerfern scharf in guter Qualität abzubilden und die Notwendigkeit einer Blende zu vermeiden.

Diese Aufgabe wird durch den Gegenstand der unabhängigen Patentansprüche gelöst.

Gemäß einem Ausführungsbeispiel umfasst eine strahlformende Optik zur Erzeugung einer eine zumindest abschnittsweise zu einer ersten Transversalrichtung und einer senkrecht hierzu angeordneten zweiten Transversalrichtung schräg verlaufende Hell-Dunkel-Kante aufweisenden Hell-Dunkel-Verteilung basierend auf einem einfallenden Licht, wobei die Strahlformende Optik ein Kondensorlinsenarray zum Empfangen des einfallenden Lichts; und ein Projektionslinsenarray mit einer Vielzahl von Projektionslinsen zum Ausgeben eines von dem Kondensorlinsenarray empfangenen Lichts aufweist, umfasst. Das Kondensorlinsenarray umfasst eine Mehrzahl von Kondensorlinsen, die in einer Matrixanordnung mit mehreren Spalten und mehreren Zeilen angeordnet sind, wobei Kondensorlinsen zumindest einer ersten Spalte an die schräg verlaufende Hell-Dunkel-Kante angepasst sind. Eine erste Projektionslinse, die einer ersten Kondensorlinse der ersten Spalte der Matrix zugeordnet ist, ist verglichen mit einer zweiten Projektionslinse, die einer zweiten Kondensorlinse der ersten Spalte zugeordnet ist, entlang der zweiten Transversalrichtung unterschiedlich bezüglich der zugeordneten Kondensorlinse dezentriert. Diese Dezentrierung ermöglicht die Positionierung von Störlichtartefakten an voneinander verschiedenen Positionen in der zweiten Transversalrichtung, so dass auch ohne Blenden eine scharfe Abbildung ohne übermäßig störende Artefakte erhalten werden kann.

Gemäß einem weiteren Ausführungsbeispiel ist alternativ oder zusätzlich zu der individuellen Dezentrierung vorgesehen, dass in dem Abblendlichtscheinwerfer Kondensorlinsen der ersten Spalte jeweils eine erste und eine gegenüberliegende zweite Berandungskante aufweisen, die zumindest einen Knick aufweisend entlang der zweiten Transversalrichtung und zumindest abschnittsweise schräg verlaufen, und so an die schräg verlaufende Hell-Dunkel-Kante angepasst sind. Bei zumindest einer Kondensorlinse ist ein Knick der ersten Berandungskante zu einem entsprechenden Knick der zweiten Berandungskante entlang der zweiten Transversalrichtung versetzt angeordnet. Auch dies ermöglicht eine scharfe Abbildung der Hell-Dunkel-Kante ohne die Notwendigkeit einer Blendenanordnung unter Vermeidung von Störlichtartefakten.

Gemäß einem weiteren alternativen Ausführungsbeispiel umfasst ein Abblendlichtscheinwerfer mit einer eine Lichtquelle aufweisenden anamorphotisch kollimierten Lichtquellenanordnung, die entlang einer zweiten Transversaltrichtung eine größere Divergenz aufweist als entlang einer senkrecht hierzu angeordneten ersten Transversalrichtung, einem blendenfreien mikrooptischen Strahlformer, umfassend ein erstes Kondensorlinsenarray mit in Spalten identischer Breite und Zeilen individuell unterschiedlicher Höhe flächenfüllend angeordneten Kondensorlinsen, wobei die Kondensorlinsen zumindest teilweise als entlang der ersten Transversalrichtung dezentrierte Linsensegmente gebildet sind; und einem entlang einer Lichtausbreitungsrichtung danach angeordneten, zweiten Projektionslinsenarray, das zumindest teilweise dezentrierte Projektionslinsen umfasst, und das einen größeren Pitch entlang der zweiten Transversalrichtung aufweist als das Kondensorlinsenarray und einen gleichen Pitch entlang der ersten Transversalrichtung, wobei jede Kondensorlinse die Lichtquelle in eine ihr zugeordnete Projektionslinse abbildet und jede Projektionslinse die zugeordnete Kondensorlinse nach Unendlich abbildet; und so eine Fernfeldverteilung des Abblendlichts formt; wobei eine Strahlformung des Strahlformers entlang der zweiten Transversalrichtung sich zumindest teilweise aus einem Zusammenspiel einer Divergenzverteilung der kollimierten Lichtquellenanordnung entlang der zweiten Transversalrichtung und der Strahlformung der Linsenarrays entlang der zweiten Transversalrichtung ergibt; wobei Kondensorlinsen in einem mittleren Bereich des Kondensorlinsenarrays zur Erzeugung einer Ellbogen-Schulterkontur einer Hell-Dunkelgrenze in der Fernfeldverteilung einen dementsprechenden Knick in entlang der ersten Transversalrichtung gegenüberliegenden Berandungen aufweisen; und die Positionen der Knicks entlang der zweiten Transversalrichtung für zumindest eine Teilmenge der Kondensorlinsen einer Kondensorlinsenarrayspalte unterschiedlich sind und die zugeordneten Projektionslinsen Linsensegmente mit unterschiedlicher Dezentrierung entlang der zweiten Transversalrichtung umfassen.

Weitere vorteilhafte Ausgestaltungen der vorliegenden Erfindung sind der Gegenstand abhängiger Patentansprüche.

Besonders bevorzugte Ausführungsformen der vorliegenden Erfindung werden nachfolgend Bezug nehmend auf die beiliegenden Zeichnungen erläutert. Es zeigen:
- Fig. 1: eine schematische perspektivische Raumansicht eines Abblendlichtscheinwerfers gemäß einem Ausführungsbeispiel;
- Fig. 2a: eine schematische Seitenschnittansicht einer Ausgestaltung des Abblendlicht- scheinwerfers aus Fig. 1;
- Fig. 2b: eine zur Fig. 2a korrespondierende Draufsicht auf den Abblendlichtscheinwerfer;
- Fig. 3a: eine schematische Seitenschnittansicht eines Strahlformers der strahlformenden Optik gemäß einem Ausführungsbeispiel;
- Fig. 3b: eine schematische Draufsicht auf die strahlformende Optik aus Fig. 3a;
- Fig. 3c: eine schematische Seitenschnittansicht eines Abblendlichtscheinwerfers gemäß einer Ausführungsform, bei der die Lichtquellenanordnung ausgebildet sein kann, um das Licht des Lichtkegels so bereitzustellen, dass dieser entlang einer ersten Transversalrichtung divergenter ist als entlang einer zweiten Transversalrichtung;
- Fig. 4: eine schematische Draufsicht auf einen bekannten Strahlformer;
- Fig. 5a: die von den drei zentralen Spalten aus Fig. 4 erzeugten Fernfeldverteilungen;
- Fig. 5b: eine schematische Darstellung einer Überlagerung der Fernfeldverteilungen aus Fig. 5a;
- Fig. 6: eine schematische Draufsicht auf einen optischen Strahlformer gemäß einem Ausführungsbeispiel ;
- Fig. 7a: schematische Darstellungen von Fernfeldverteilungen des Strahlformers aus Fig. 6
- Fig. 7b: eine schematische Darstellung einer Überlagerung der Fernfeldverteilungen aus Fig. 7a;
- Fig. 8a-b: schematische Darstellungen möglicher alternierender Anordnungen von Kondensorlinsen in einer Kondensorlinsenarrayspalte gemäß Ausführungsbeispielen;
- Fig. 9: ein schematisches Flussdiagramm eines Verfahrens gemäß einem Ausführungsbeispiel; und
- Fig. 10: eine schematische Darstellung die Hell-Dunkelgrenze gesehen in Fahrtrichtung rechts bei Rechtsverkehr.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

Nachfolgend beschriebene Ausführungsbeispiele werden im Zusammenhang mit einer Vielzahl von Details beschrieben. Ausführungsbeispiele können jedoch auch ohne diese detaillierten Merkmale implementiert werden. Des Weiteren werden Ausführungsbeispiele der Verständlichkeit wegen unter Verwendung von Blockschaltbildern als Ersatz einer Detaildarstellung beschrieben. Ferner können Details und/oder Merkmale einzelner Ausführungsbeispiele ohne Weiteres mit einander kombiniert werden, solange es nicht explizit gegenteilig beschrieben ist.

Ausführungsformen der vorliegenden Erfindung beziehen sich auf Ausgestaltungen des Kondensorlinsenarrays eines Wabenkondensators ggf. in Zusammenspiel mit den jeweils zugeordneten Projektionslinsen.

Ausführungsformen zeigen eine Geometrie von Komponenten in Bezug auf automotiven Rechtsverkehr, die für die Verwendung der Erfindung bei Linksverkehr gespiegelt werden kann.

Hierin beschrieben werden Abblendlichtscheinwerfer mit einer erfindungsgemäßen strahlformenden Optik. Eine solche strahlformende Optik ermöglicht die Erzeugung einer vorteilhaften Lichtverteilung unabhängig davon, ob eine zur Beleuchtung der strahlformenden Optik eingesetzte Lichtquelle entlang unterschiedlicher Transversalrichtungen mehr oder weniger divergent ist, wobei eine größere Divergenz entlang der bspw. horizontalen Transversalrichtung als entlang der bspw. parallel zu einer Höhenrichtung angeordneten Transversalrichtung eine einfache Ausgestaltung eines Scheinwerfers ermöglicht, dessen Lichtkegel über die Straßenbreite möglicherweise breiter sein soll als entlang der Höhenrichtung.

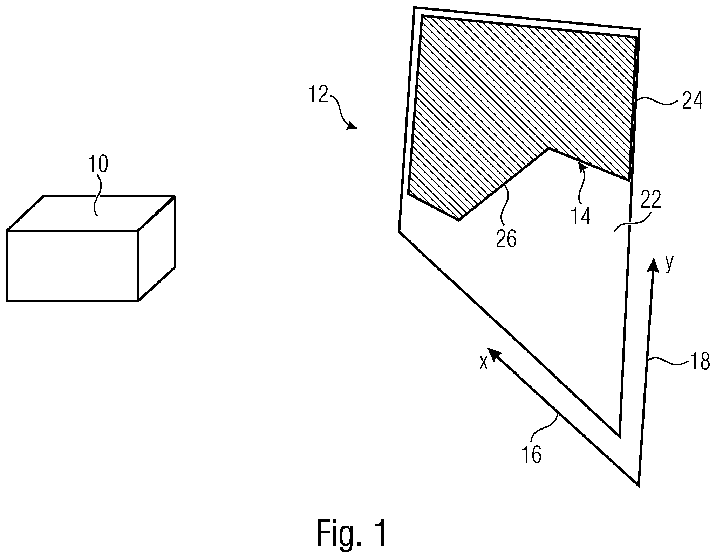

Fig. 1 zeigt eine schematische perspektivische Raumansicht eines Abblendlichtscheinwerfers 10 gemäß einem Ausführungsbeispiel zur Erzeugung eines Abblendlichts 12. Eine Lichtverteilung des Abblendlichts 12 weist eine Hell-Dunkel-Kante 14 auf und ist entlang einer zweiten Transversalrichtung 16, die beispielhaft mit x bezeichnet ist, und einer ersten Transversalrichtung 18, die beispielhaft mit y bezeichnet werden kann und senkrecht zur ersten Transversalrichtung angeordnet ist, dargestellt. Die Darstellung der Hell-Dunkel-Kante 14 ist beispielhaft für den Rechtsverkehr dargestellt und kann einen hellen ausgeleuchteten Bereich 22 von einem vergleichsweise dunklen weniger ausgeleuchteten oder nicht ausgeleuchteten Bereich 24 trennen. Zumindest abschnittsweise kann die Hell-Dunkel-Kante 14 schräg verlaufen, was für einen schrägen Abschnitt 26 dargestellt ist.

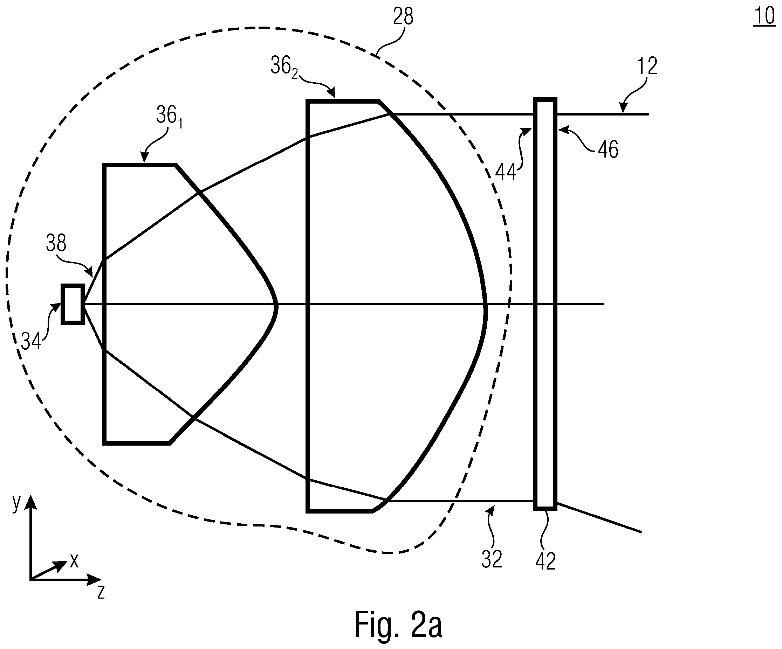

Fig. 2a zeigt eine schematische Seitenschnittansicht einer Ausgestaltung des Abblendlichtscheinwerfers 10 aus Fig. 1. Der Abblendlichtscheinwerfer kann eine Lichtquellenanordnung 28 aufweisen. Diese kann, sofern angeordnet ausgebildet sein, um einen Lichtkegel 32 bereitzustellen. Der Lichtkegel kann entlang der ersten Transversalrichtung y mehr oder weniger divergent ist als entlang der zweiten Transversalrichtung x.

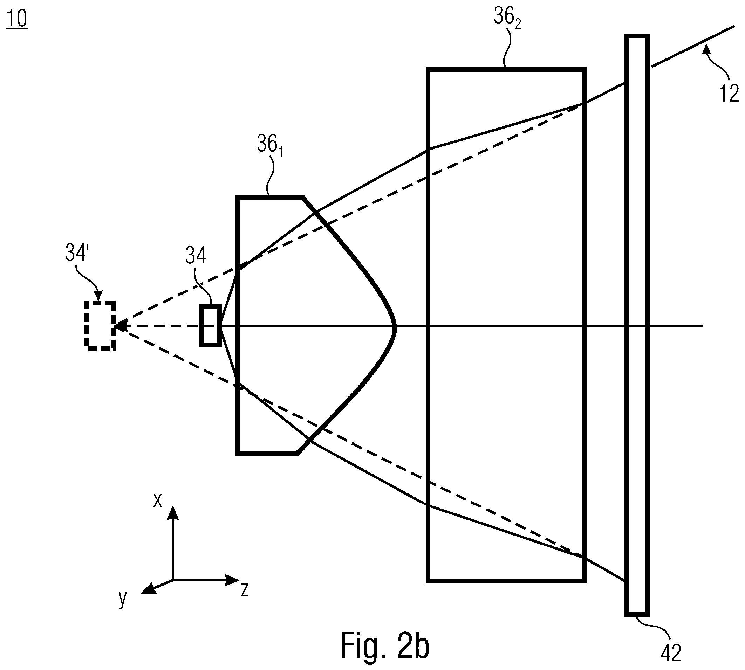

Fig. 2b zeigt eine zur Fig. 2a korrespondierende Draufsicht auf den Abblendlichtscheinwerfer 10 bzw. die in der Fig. 2a dargestellten Teile davon. Die entlang der Transversalrichtungen x und y unterschiedlichen Divergenzen können beispielsweise dadurch erhalten werden, dass eine divergent abstrahlende Lichtquelle 34 vorgesehen ist, beispielsweise eine LED, wobei ohne weiteres auch andere geeignete Lichtquellen einsetzbar sind. Vermittels einer nachgeschalteten Optik 36₁, etwa eine asphärische Linse 36₁, beispielsweise eine Feldlinse, die zwischen die Lichtquelle 34 und einen Kollimator 36₂ zur Vorkollimation angeordnet ist. Die Optik 36₁, kann eine Formung des von der Lichtquelle 34 ausgesendeten Lichts 38 ermöglichen. Die Optik 36₁ kann alternativ oder zusätzlich andere Eigenschaften aufweisen, etwa indem optional eine Zylinderlinse 36₂ vorgesehen ist, um entlang der Transversalrichtungen x und y unterschiedliche Grade der Kollimation vorzusehen, was in unterschiedlichen Divergenzen der Lichtquelle entlang der Transversalrichtungen münden kann. Wie es in der Fig. 2b dargestellt ist, kann eine Feldlinse 36₁ ein vergrößertes, virtuelles Bild 34' der Lichtquelle 34 formen.

Ferner umfasst der Abblendlichtscheinwerfer 10 eine strahlformende Optik 42, die ein Kondensorlinsenarray 44 und ein gegenüberliegend angeordnetes Projektionslinsenarray 46 aufweisen kann. Die strahlformende Optik 42 kann auch ohne weitere Komponenten des Scheinwerfers vorliegen und ist ausgebildet, um die zumindest abschnittsweise zu den Transversalrichtungen x und y schräg verlaufende Hell-Dunkel-Kante 14, d. h. zumindest Teile des Bereichs 26, basierend auf dem Licht des Lichtkegels 32 zu erzeugen. Während Kondensorlinsen des Kondensorlinsenarrays 44 ausgebildet sind, um das einfallende Licht zu empfangen, können Projektionslinsen des Projektionslinsenarrays 46 zum Ausgeben eines von dem Kondensorlinsenarray 44 empfangenen Lichts ausgebildet sein. Hierzu kann beispielsweise jeweils eine Projektionslinse einer Kondensorlinse zugeordnet sein. Die entsprechende Kondensorlinse des Kondensorlinsenarrays 44 kann ausgebildet sein, um die Lichtquelle bzw. Lichtquellenanordnung in die zugeordnete Projektionslinse abzubilden und die Projektionslinse kann ausgebildet sein, um die Kondensorlinse scharf abzubilden, beispielsweise nach Unendlich. Eine Ausgestaltung des Kondensorlinsenarrays dergestalt, dass dieses die Lichtquellenanordnung scharf in das Projektionslinsenarray abbildet, kann eine Köhler'sche Beleuchtung ermöglichen.

Gemäß einem Ausführungsbeispiel ist die Lichtquellenanordnung 28 ausgebildet, um eine in die Transversalrichtungen x und y divergent abstrahlende Lichtquelle vermittels eines Kollimators, etwa die Zylinderlinse 36₂, zum Kollimieren divergenten Lichts und mit entlang der Transversalrichtungen unterschiedlichen Kollimationsgraden umzusetzen. Bevorzugt ist der Kollimationsgrad entlang der ersten Transversalrichtung y gegenüber der zweiten Transversalrichtung x erhöht.

Der Kollimator 36₂ kann einen Zylinderlinsenkollimator oder einen azylindrischen Kollimator oder einen toroidalen Kollimator umfassen. Bevorzugt ist die Lichtquellenanordnung 28 ausgebildet, dass das Licht des Lichtkegels 32 eine Divergenz aufweist, die entlang der Transversalrichtung x um mehr als das 10-Fache größer ist als entlang der Transversalrichtung y.

In anderen Worten kann das Abblendlicht eine kollimierte Lichtquelle und einen mikrooptischen Strahlformer 42 umfassen. Die kollimierte Lichtquelle kann ganz oder teilweise in Übereinstimmung mit der in [2] beschriebenen Quelle aus LED und einer Sekundäroptik bestehen, wobei die Sekundäroptik möglicherweise eine Feldlinse und eine Kollimationszylinderlinse umfassen kann, um eine zumindest näherungsweise vollständige Kollimation in der Vertikalen y bereitzustellen, wie es in der Fig. 2a gezeigt ist. Entlang der Horizontalen x kann zumindest eine Einschränkung der Divergenz durch die Feldlinse 36₁ erfolgen. Der Strahlformer 42 kann ferner ein Kondensorlinsenarray 44 und ein Projektionslinsenarray 46 umfassen, die im Abstand einer Brennweite zueinander justiert sind und als irregulärer Wabenkondensor wirken können.

Die beispielsweise als LED ausgebildete Lichtquelle 34 kann innerhalb der einfachen Brennweite der Feldlinse 36₁ angeordnet sein, z. B. einer Halbkugellinse oder Asphäre oder auch einer anamorphotischen Linse zur Vergrößerung des Öffnungswinkels und Formung der Winkelverteilung. Die Feldlinse kann dementsprechend ein vergrößertes, virtuelles Bild 34' der Lichtquelle 34 formen und die Bündeldivergenz verringern. Die nachfolgend angeordnete Linse 36₂, etwa eine Zylinderlinse, kann die Abstrahlung gemäß einem Beispiel lediglich entlang der Vertikalen kollimieren und die horizontale Winkelverteilung weitgehend unbeeinflusst lassen, wobei eine andere abgestimmte Ausgestaltung der Optiken problemlos implementierbar ist. Eine Auslegung des Kollimators als anamorphotische Linse mit optional asphärischen Profilen in einer oder beiden Raumrichtungen kann zu Vergrößerung des Öffnungswinkels, einer Aberrationskorrektur und/oder ggf. mit zur Steuerung der horizontalen Winkelverteilung beitragen.

Bevor auf Details zur Implementierung der strahlformenden Optik 42 eingegangen werden soll, wird zunächst auf das Zusammenspiel zwischen Kondensorlinsenarray 44 und Projektionslinsenarray 46 eingegangen. Die strahlformende Optik 42 umfasst ein Tandemarray irregulärer, vorwiegend rechteckig berandeter Lenslets oder Linsen, mit annähernd gleicher Brennweite, die in einem Abstand von einer Brennweite in Lichtausbreitungsrichtung, beispielsweise z, zueinander angeordnet sind.

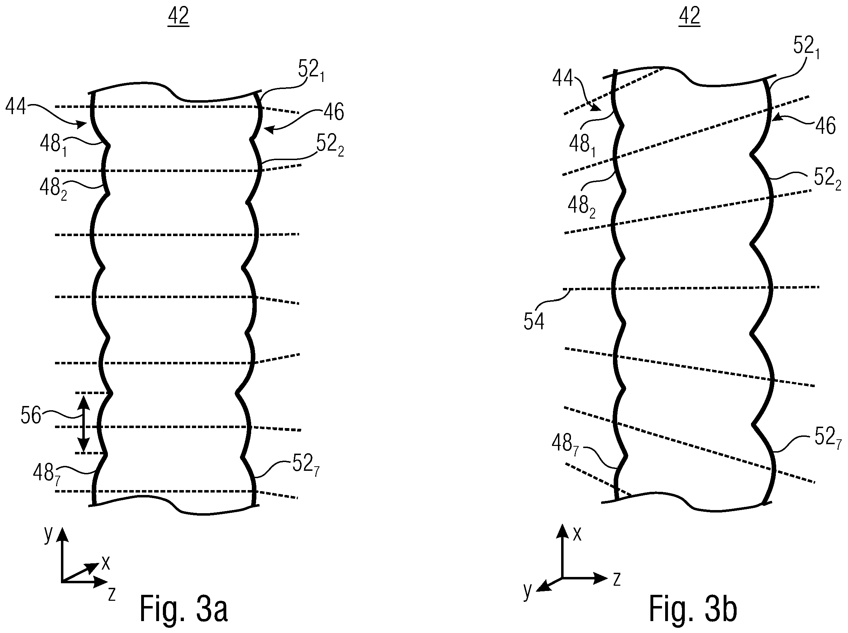

Fig. 3a zeigt eine schematische Seitenschnittansicht bzw. ist einen Vertikalschnitt des Strahlformers der strahlformenden Optik 42 bzw. ein Ausschnitt hiervon, während die Fig. 3b eine schematische Draufsicht auf die strahlformende Optik 42 als ein Horizontalschnitt des Strahlformers bzw. des zur Fig. 3a korrespondierenden Ausschnitts eines zentralen Bereichs zeigt.

Dargestellt ist in den Fig. 3a und 3b jeweils lediglich ein Teil der strahlformenden Optik 42 bzw. der Kondensorlinsenarrays 44 und 48 mit einigen Kondensorlinsen 48₁-48₇ in Fig. 3a bzw. 48₁₁ bis 48₁₇ in Fig. 3b sowie einer jeweils zugeordneten Projektionslinse 52₁-52₇ bzw. 52₁₁ bis 52₁₇.

Jeweils ein Eingangs-Kondensor-Lenslet 48₁-48₇ und ein zugeordnetes Ausgangs-Projektions-Lenslet 52₁-52₇ können einen Kanal des Wabenkondensors formen, analoge Ausführungen gelten für die Linsen 48₁₁ bis 48₁₇ und 52₁₁ bis 52₁₇ in Fig. 3b. Im Beleuchtungsstrahlengang bilden die Kondensorlenslet 48 die Lichtquelle 34 in das jeweils zugeordnete Projektionslenslet 52 ab, was als Köhlerbeleuchtung bezeichnet werden kann, während die Projektionslenslet 52 das jeweils zugeordnete Kondensorlenslet 48 im Abbildungsstrahlengang nach Unendlich abbilden können. Die Überlagerung dieser Abbildungen formt das Fernfeld des Wabenkondensors, WaKos. Die Anordnung der Kanäle in einem unregelmäßigen, rechteckigen Gitter kann eine einfache Separation der Steuerung der horizontalen und vertikalen Intensitätsverteilungen ermöglichen.

Wie es in der Fig. 3b dargestellt ist, kann der horizontale Pitch des Ausgangsarrays 46 entlang der Richtung x, geringfügig größer sein als der des Eingangsarrays 44, um trotz des mit größer werdendem horizontalen Abstand des zur optischen Achse 54 ebenfalls größer werdenden Hauptstrahlwinkels in horizontaler Richtung die Abbildungen der Quelle in das Ausgangsarray 46 flächenfüllend aneinanderzureihen.

Durch diese Anordnung kann die ausgehende horizontale Divergenz des Strahlformers höher als bei jedem einzelnen Wabenkondensor-Kanal sein. Jede Spalte des Wabenkondensorarrays kann dabei eine Intensitätsspalte im Fernfeld erzeugen. Die Intensitätsspalten können sich dort in horizontaler Richtung überlappen. Entsprechend dem Designansatz des irregulären Wabenkondensors, wie er beispielsweise in [3] und [4] beschrieben ist, kann die horizontale Strahlformung durch individuell unterschiedliche Breiten der Kondensorlensletspalten und eine horizontale Verschiebung der Scheitel der Projektionslenslets 52, hier im Zusammenspiel mit der horizontalen Fernfeldverteilung der kollimierten Lichtquelle, erfolgen.

Eine Dezentrierung, d. h. Verschiebung der Scheitel der Projektionslenslets 52 zur Strahlformung, kann zur Vereinfachung der Herstellung und Vermeidung von Streulicht verursachenden Profilhöhensprüngen zwischen benachbarten Lenslets vorzugsweise innerhalb einer Spalte konstant eingerichtet sein, kann aber auch innerhalb einer Spalte variieren. Vorzugsweise wird die horizontale Strahlformung weitgehend durch die von der Feldlinse 36₁ geformte Quellverteilung realisiert, um den Wabenkondensor möglichst uneingeschränkt für die deutlich schwieriger vertikale Strahlformung einsetzen zu können. Unter Inkaufnahme entsprechender Aufwände kann aber auch hiervon abgewichen werden.

Ausgehend von der im Zusammenhang mit der Fig. 2a dargestellten vertikal kollimierten Lichtquelle kann die vertikale Strahlformung durch eine irreguläre Auslegung der Arraykanäle in jeder Spalte entlang vertikaler Richtung ausgehend von den in [3] und [4] beschriebenen Designgrundsätzen erfolgen, wie es beispielsweise in Fig. 3a dargestellt ist. Das kann Folgendes umfassen:
- unterschiedliche vertikale Aperturgrößen 56 und/oder Aperturdezentrierungen der Eingangslenslets bei konstanter, vertikaler Vertexposition des Lenslets in der Kanalachse; sowie
- irreguläre, vertikale Vertexpositionen der Ausgangslenslets innerhalb eines vertikal regulären Aperturarrays.

Gemäß Ausführungsbeispielen kann jede Lensletspalte dabei eine individuelle Konfiguration von Eingangsaperturen und Ausgangsvertices umfassen, die die vertikale Intensitätsverteilung an der entsprechenden horizontalen Position im Fernfeld erzeugt. Dadurch kann die 2D-Fernfeldverteilung mit den unterschiedlichen vertikalen Positionen der Hell-Dunkel-Grenze links und rechts, bei weitgehend identischer Verteilung unterhalb des Horizonts erreicht werden.

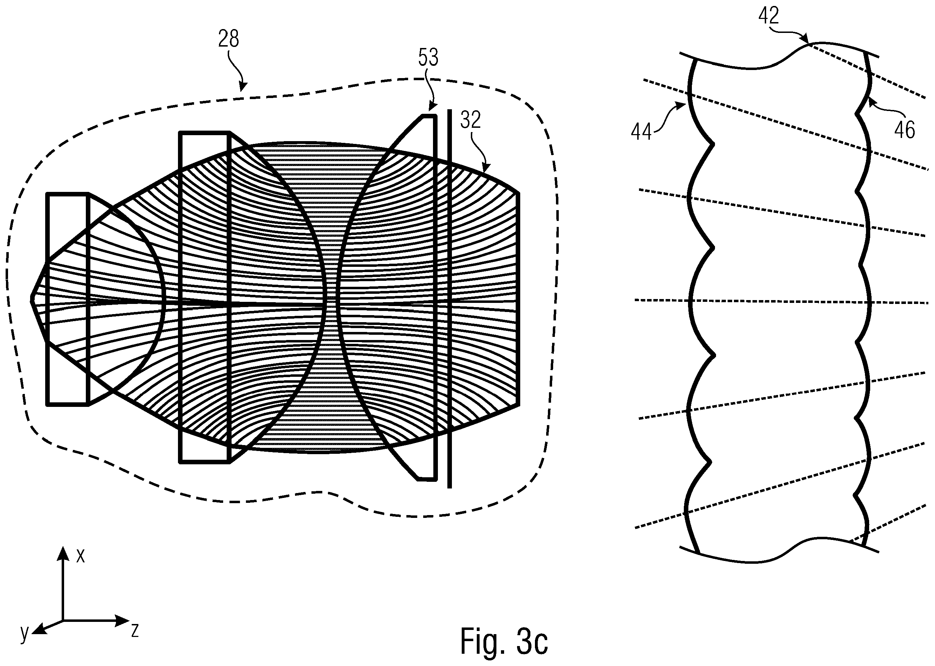

Fig. 3c zeigt eine schematische Seitenschnittansicht eines Abblendlichtscheinwerfers 30 gemäß einer Ausführungsform, bei der die Lichtquellenanordnung 28 ausgebildet sein kann, um das Licht des Lichtkegels 32 so bereitzustellen, dass dieser anders als in der entlang der Fig. 2b dargestellt entlang der ersten Transversalrichtung y divergenter also ausgebreiteter ist als entlang der zweiten Transversalrichtung x. Bspw. kann die Lichtquellenanordnung 28 ausgebildet sein, um vermittels einer Optik 53 eine Bündelung des Lichtkegels 32 entlang der Transversalrichtung x auszuführen. Die relative Positionierung der Kondensorlinsen des Kondensorlinsenarrays 44 bezüglich der Projektionslinsen des Projektionslinsenarrays 46 oder andersherum kann entsprechend dem veränderten Verlauf der Strahlengänge angepasst werden.

In einem Abblendlichtscheinwerfer gemäß einem Ausführungsbeispiel kann die Lichtquellenanordnung zur Erzeugung eines Lichtkegels 32 aus Licht vorgesehen sein, um das einfallende Licht für die strahlformende Optik 42 bereitzustellen. Der Lichtkegel kann ein Aspektverhältnis bezogen auf die erste Transversalrichtung y und die zweite Transversalrichtung x aufweist, welches einen Wert von 1 beträgt oder einen hiervon abweichenden Wert, bspw. zumindest zwei, zumindest 3, zumindest 5, zumindest 10 oder mehr, was jeweils im Sinne von 2:1 oder 1:2 und so weiter, also auch dem Kehrwert zu verstehen ist.

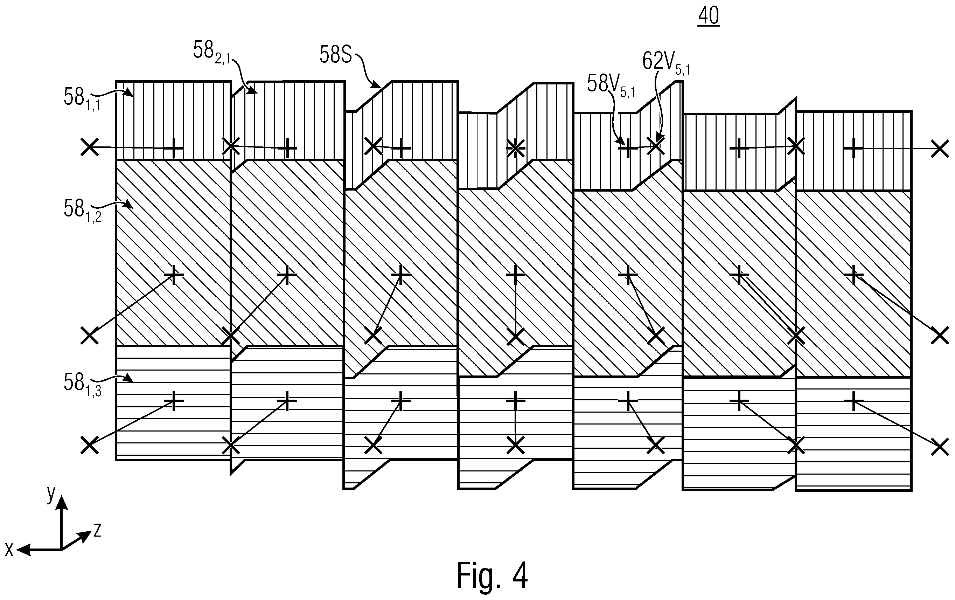

Fig. 4 zeigt eine schematische Draufsicht auf einen bekannten Strahlformer 40, der als Grundlage für die späteren Erörterungen zur vorliegenden Erfindung dienen soll.

Kondensorlinsen 58_{i,j} können in Spalten i und Zeilen j angeordnet sein und Scheitel bzw. Vertices 58V_{i,j} aufweisen. Schräge Abschnitte 58S_{i,j} können entlang der y-Richtung versetzt zueinander und parallel zueinander verlaufen. Wie es anhand der Fig. 3a und 3b beschrieben ist, kann ein entlang der jeweiligen Spalte i in x-Richtung konstanter Versatz der Vertices 58V bezüglich zugeordneter Vertices 62V_{i,j} vorliegen, und sich entlang der y-Richtung unterscheiden, womit der Versatz bzw. die Dezentrierung entlang der ersten Transversalrichtung zeilenabhängig sein kann und entlang der zweiten Transversalrichtung spaltenabhängig. Anhand der gestrichelten Linien 59 ist eine Zuordnung von Vertices 58V der Kondensorlinsen zu Vertices 62V der Projektionslinsen dargestellt.

Die Strahlformung der Ellenbogen-Schulterregion im zentralen Bereich des Wabenkondensors kann durch die Nutzung einer speziell geformten 8-eckigen Berandung der in einem rechteckigen Gitter angeordneten Kondensorlenslets im zentralen Bereich des Tandemarrays erfolgen, der in Fig. 4 betrachtet aus Richtung der Lichtquelle dargestellt ist. Im zentralen Bereich können Lenslets des Kondensorlinsenarrays mit einem Knick in der oberen und unteren Berandung vorgefunden werden. Die Vertices der Kondensorlenslets 58 befinden sich horizontal etwa in der Mitte des jeweiligen Kanals.

Die Vertexpositionen 62V_{i,j} der jeweils zugeordneten Projektorlenslets 62 sind spaltenweise zu den jeweiligen Kondensorvertices horizontal verschoben, um einen in der Horizontalen möglichst geradlinigen Durchgang des Zentralstrahls durch den Kanal zu ermöglichen. Der laterale Versatz des jeweiligen Projektorvertex relativ zum darunter (negative y-Richtung) liegenden Knick ist in dem bekannten Ansatz für alle Kanäle in x- und y-Richtung identisch, damit dieser Knick für alle Kanäle präzise überlagert im Fernfeld als Ellenbogen-Schulterbereich der Hell-Dunkel-Grenze abgebildet wird.

In anderen Worten zeigt Fig. 4 eine Ansicht eines Ausschnitts eines zentralen Bereichs eines bekannten Kondensorarrays, betrachtet aus Richtung der kollimierten Lichtquelle.

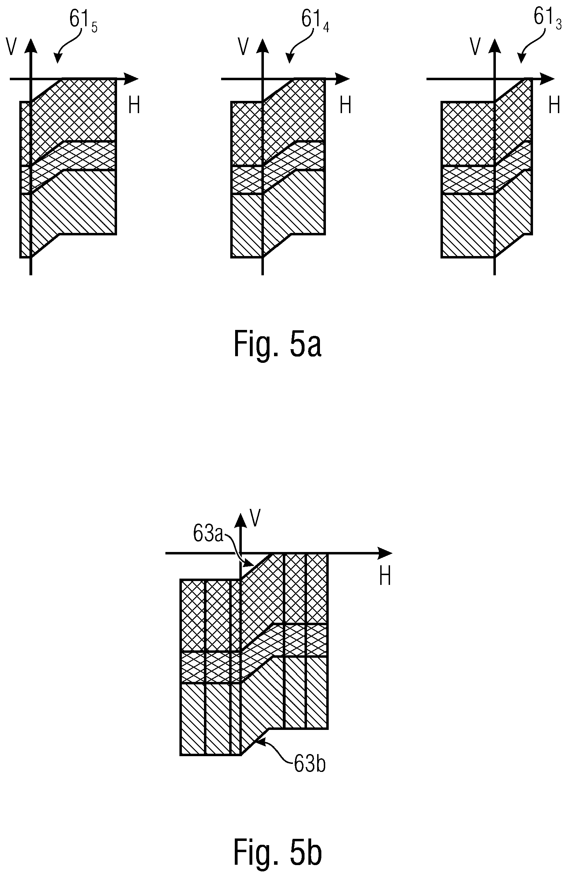

Fig. 5a zeigt die von den drei zentralen Spalten i=3, 4, 5 aus Fig. 4 erzeugten Fernfeldverteilungen 61₃, 61₄ und 61₅. Der kanalweise unterschiedliche vertikale Versatz zwischen Projektorvertex 62V und dem jeweils darüber (+y) befindlichen Knick oder schrägen Abschnitt 58S führt zum Erscheinen mehrerer, übereinander angeordneter Ellenbogen-Schulterartefakte in der Fernfeldverteilung unterhalb (-y) der eigentlichen Hell-Dunkel-Grenze. In anderen Worten zeigt Fig. 5a eine Fernfeldverteilung der drei mittleren Spalten der Struktur aus Fig. 4.

Die Überlagerung dieser drei Fernfeldverteilungen zeigt Fig. 5b. Die Abbilder der bezogen auf die Kanalachse unteren Berandungskante der Kondensorlinsen formen in ihrer Überlagerung den Ellenbogen-Schulterbereich der Hell-Dunkel-Grenze 63a und die ungewollten Abbilder 63b der jeweils gegenüberliegenden Berandungskante bilden beispielhaft ein innerhalb der Fernfeldverteilung liegenden, in vertikaler Richtung unscharfes Artefakt ab, was in einer ungewollten Verzerrung der Helligkeitsverteilung in der Nähe des Intensitätsmaximums resultiert. Diese ungewollten Effekte werden durch die vorliegende Erfindung adressiert.

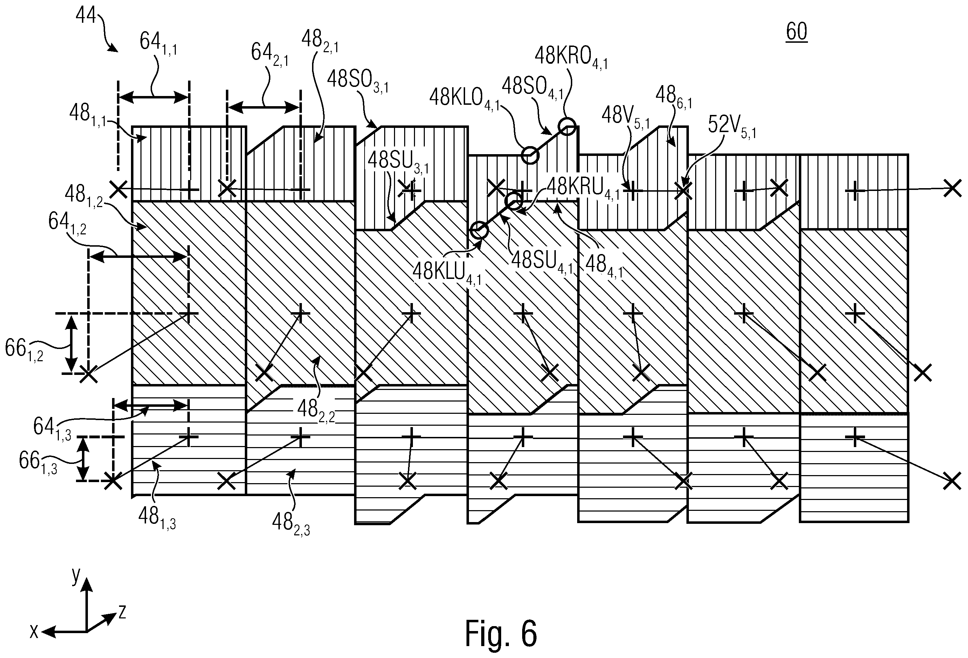

Aufbauend hierauf zeigt Fig. 6 eine schematische Draufsicht auf einen optischen Strahlformer 60, der als Strahlformer der Optik 42 in hierin beschriebenen Abblendlichtscheinwerfern einsetzbar ist, beispielsweise als strahlformende Optik 42. Das Kondensorlinsenarray 44 bezeichnet dabei mit übereinstimmenden Indices i und j bezeichnete Kondensorlinsen 48 und das Projektionslinsenarray umfasst entsprechend bezeichneten Projektionslinsen 52. Mit dem Zusatz "V" ist der Vertex bzw. Scheitel der jeweiligen Linse bezeichnet. Mit dem Zusatz "SO" ist eine obere schräge Kante und mit dem Zusatz "SU" eine untere der Kondensorlinse bezeichnet.

Als oben und unten wird dabei beispielhaft eine Position entlang positiverer y-Richtung bzw. negativerer y-Richtung verstanden, wobei dies lediglich einen Bezug zur Verwendung als Abblendlichtscheinwerfer und dessen Orientierung bzw. Einbaurichtung im Kraftfahrzeug herstellt, für die hierin beschriebene Ausführungsbeispiele aber nicht einschränkend ist.

In unterschiedlichen Spalten i kann ein schräg verlaufender Abschnitt 48SO bzw. 48SU teilweise oder vollständig enthalten sein. Eine vollständige Ausprägung, wie beispielsweise als 48SO_{4,1} und 48SU_{4,1} führt zu zwei Knicken in der oberen bzw. unteren Berandung der Kondensorlinse. Die schrägen Abschnitte sind gemäß einem Ausführungsbeispiel entlang der zweiten Transversalrichtung x versetzt zueinander angeordnet, siehe beispielsweise die Kondensorlinse 48_{4,1}. Dies kann auch so beschrieben werden, dass zueinander korrespondierende Knicke in den Berandungen, etwa die beiden Knicke rechts oben oder die beiden Knicke jeweilig links unten, entsprechend versetzt zueinander angeordnet sind, das bedeutet, es erfolgt ein Versatz der Kante 48SO_{4,1} entlang positiver x-Richtung und entlang negativer y-Richtung oder andersherum. Mit den Kennungen "KLO", "KRO", "KLU" sowie "KRU" sind die jeweiligen Knicke "K" links "L" bzw. rechts "R" sowie oben "O" oder unten "U" bezeichnet. Dabei sind die Knicke rechts oben und rechts unten einander zugeordnet und die Knicke links oben und links unten einander zugeordnet. Gemäß einem Ausführungsbeispiel umfasst das Kondensorlinsenarray zumindest in einem mittleren oder zentralen Bereich eine oder mehrere Spalten, bei denen jeweils eine erste und eine zweite gegenüberliegende Berandungskante einer Kondensorlinse vorgesehen ist. Diese Kanten weisen zumindest einen Knick auf, siehe beispielsweise die Spalte i = 2 gegenüber der Spalte i = 4, bei denen vermittels einer schräg verlaufenden Berandungskante eine Anpassung an die Hell-Dunkel-Kante vorgesehen ist. Ein Knick der ersten Berandungskante, beispielsweise der oberen, ist zu einem Knick der zweiten Berandungskante, beispielsweise der unteren oder andersherum, entlang der Transversalrichtung x versetzt zueinander angeordnet. Hierdurch kann eine Überlagerung der Hell-Dunkel-Kante im Fernfeld vermieden werden, was der optischen Qualität der Abbildung zuträglich ist.

Ferner ist in der Fig. 6 eine Ausführungsform der vorliegenden Erfindung gezeigt, die unabhängig von der Verschiebung der Knicke bzw. der schrägen Abschnitte der Berandungskanten implementiert werden kann. Gemäß dieser Ausführung ist eine erste Projektionslinse, die einer ersten Kondensorlinse einer Spalte der Matrixanordnung der Kondensorlisen in mehreren Spalten und mehreren Zeilen zugeordnet ist, verglichen mit einer anderen Projektionslinse derselben Spalte entlang der zweiten Transversalrichtung x unterschiedlich bezüglich der zugeordneten Kondensorlinse dezentriert. Dies ist beispielsweise anhand der Dezentrierungen oder Verschiebungen 64 der Spalte i = 1 gezeigt. Die Verschiebung 64_{1,2} unterscheidet sich dabei gegenüber den Verschiebungen 64_{1,1} und 64_{1,3}.

Optional aber nicht notwendigerweise können die Verschiebungen 64_{1,1} und 64_{1,3} gleich zueinander sein. Durch diese voneinander verschiedenen Dezentrierungen kann ebenfalls eine Überlagerung der Hell-Dunkel-Kante vermieden werden. Wie es anhand der Kondensorlinsen 48_{2,1} und 48_{1,3} gezeigt ist, ist es nicht notwendig, dass zwei gegenüberliegende Berandungskanten an die schräg verlaufende Hell-Dunkel-Kante 26 angepasst sind, auch wenn dies, wie es beispielsweise für die Kondensorlinse 48_{6,1} gezeigt ist, problemlos möglich ist. Ein entsprechender schräger Abschnitt der Berandungskanten kann nicht nur eine Anpassung der Kondensorlinse an die schräg verlaufende Hell-Dunkel-Kante ermöglichen, sondern kann entlang der Transversalrichtung x zwischen einer oberen Berandungskante (+y) und einer unteren Berandungskante (-y) verschoben angeordnet sein.

Dies kann auch so ausgedrückt werden, dass Kondensorlinsen einer Spalte zumindest eines mittleren oder zentralen Bereichs des Kondensorlinsenarrays gegenüberliegende Berandungskanten aufweisen, die zumindest einen Knick aufweisend verlaufend. Ein Verlauf kann im Wesentlichen entlang der Transversalrichtung x sein und zumindest abschnittsweise schräg sein, um die Anpassung an die schräg verlaufende Hell-Dunkel-Kante des Abblendlichts zu ermöglichen. Zumindest einer der Knicke der ersten Berandungskante kann zu einem entsprechenden Knick der zweiten Berandungskante entlang der Transversalrichtung x versetzt angeordnet sein. Es können insofern auch mehrere Spalten des Gesamtarrays an die schräg verlaufende Hell-Dunkel-Kante angepasst sein, während äußere Bereiche ein derartiges Merkmal möglicherweise nicht aufweisen.

Wie es anhand der Fig. 6 gezeigt ist, kann ein Vertex einer Kondensorlinse gegenüber einem Vertex einer ihr zugeordneten Projektionslinse entlang der Richtung x individuell dezentriert sein, wobei lediglich beispielhaft die mittlere der Zeilen eine von einer darüber liegenden und darunter liegenden Zeile abweicht, bei der die Dezentrierungen der darüber liegenden und darunter liegenden Zeile übereinstimmend ausgebildet sind, zumindest entlang der Richtung x. Dies kann so beschrieben werden, dass eine Verschiebung von Projektionslinsenvertices 52V gegenüber einem Kondensorlinsenvertex 48V einer jeweils der Projektionslinse 52 zugeordneten Kondensorlinse 48 entlang der Transversalrichtung y zeilenabhängig und spaltenunabhängig ist und entlang der Transversalrichtung x zeilenunabhängig und spaltenabhängig ist.

Durch eine entsprechende Anpassung der Kondensorlinsen und Projektionslinsen aneinander kann auf die Verwendung einer zusätzlichen Blende verzichtet werden und ein blendenfreies Abblendlicht bereitgestellt werden.

Gemäß einem Ausführungsbeispiel kann die entsprechende Berandungskante einer Kondensorlinse einen Verlauf einer hierin angrenzenden Berandungskante einer benachbarten Kondensorlinse derselben Spalte vorgeben, wie es beispielsweise für die Grenze zwischen den Kondensorlinsen 48_{2,2} und 48_{2,3} gezeigt ist. Dadurch ergibt sich aufgrund der versetzt zueinander angeordneten Positionierung der Knicke bezogen auf die obere und untere Berandungskante eines Kondensorlenslets eine unterschiedliche Konfiguration einer in der Spalte benachbarten Kondensorlinse.

Zumindest eine Teilmenge von Kondensorlinsen 48 des Kondensorlinsenarrays können als anamorphotische Linsen gebildet sein. Unabhängig hiervon kann zumindest eine Teilmenge von Projektionslinsen des Projektionslinsenarrays als anamorphotische Linsen gebildet sein, insbesondere im Außenbereich des Wabenkondensors.

Um die anhand der Fig. 4, 5a und 5b erörterten Verformung des Hotspots zu vermeiden, kann die horizontale Position des Knicks in der oberen Berandung relativ zum unteren Knick des betreffenden Kanals verschoben angeordnet werden, wie es anhand der Fig. 6 dargestellt ist. Eine womöglich erhaltene seitliche Verschiebung der Ellenbogen-Schulterregion in der Projektion des darüber befindlichen Kanals kann durch eine individuelle horizontale Dezentrierung des Projektionsvertex des Kanals erfolgen. Das bedeutet, gemäß Ausführungsbeispielen kann eine Dezentrierung der Projektionslinsen entlang der Transversalrichtung x an eine Verschiebung der Berandungskanten entlang der Transversalrichtung x angepasst sein und eine durch die Verschiebung der Berandungskanten verursachte Verschiebung der Hell-Dunkel-Kante in der Hell-Dunkel-Verteilung zumindest teilweise kompensieren.

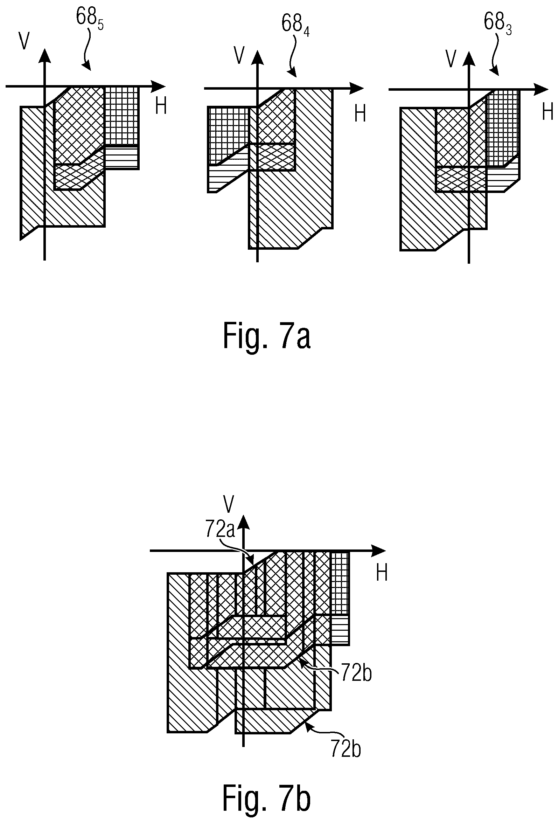

Fig. 7a zeigt zum Vergleich mit der Fig. 5a beispielhafte Fernfeldverteilungen 68₃, 68₄ und 68₅ für Spalten i=3, 4, 5 des Strahlformers 60. Fig. 7b zeigt eine schematische Darstellung einer Überlagerung der Fernfeldverteilungen 68₃, 68₄ und 68₅. Während die obere Kante 72a übereinstimmend und scharf abgebildet werden kann, können störende Artefakte 72b in der unteren Kante kanalweise horizontal zueinander dezentriert sein, was eine gute Unterdrückung einer Verzerrung des Intensitätsprofils in der Überlagerung ermöglicht und vorteilhaft ist.

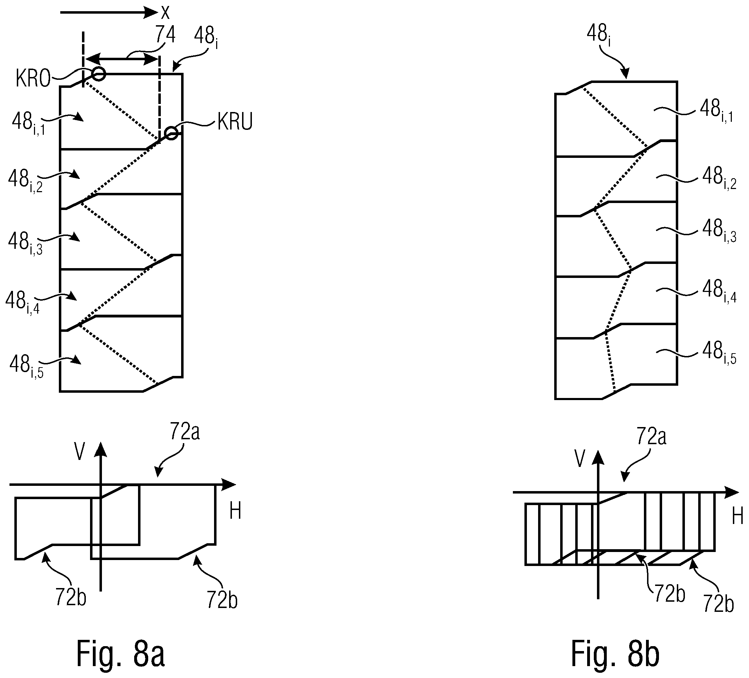

Um eine möglichst gute Verwischung der Abbildung der unteren Schulter zu erreichen, können die horizontalen Positionen des oberen und unteren Knicks eines jeden Eingangslenslets möglichst große Abstände zueinander aufweisen, das bedeutet, die Kondensorlinsen können entsprechend ausgelegt werden. Dies kann beispielsweise durch eine alternierende Anordnung gemäß der Fig. 8a innerhalb einer Spalte i erreicht werden. Ein Abstand zwischen Knicken oder Mittelpunkten der Berandungskanten entlang der Transversalrichtung x kann, wie es in Fig. 8a dargestellt ist, beispielsweise maximal sein, zumindest innerhalb eines Toleranzbereichs von ± 10 %, ±20 % oder ±30 %. Eine Lage der Knicke KRO, KRU und der anderen Knicke kann dabei von einer Position der Spalte in der Matrix abhängig sein, siehe hierzu die unterschiedlichen Positionen im Strahlformer 60. Gemäß einem Ausführungsbeispiel kann ein Betragswert eines Abstands 74, um den der Knick KRO der oberen Berandungskante zu dem entsprechenden Knick KRU der unteren Berandungskante entlang der Transversalrichtung x versetzt angeordnet ist, innerhalb einer Spalte konstant sein, wie es in Fig. 8a dargestellt ist. Für unterschiedliche Spalten kann der Betragswert des Abstands 74 jedoch unterschiedlich oder individuell ausgestaltet sein. Für benachbarte Kondensorlinsen 8i=1, ..., 5 der Spalte i kann eine Richtung der Verschiebung alternieren.

Eine alternierende Anordnung ist auch in der Konfiguration nach Fig. 8b dargestellt, bei der der Betragswert der Verschiebung innerhalb der Zeile jedoch nicht konstant, sondern individuell oder zumindest unterschiedlich ist, um eine möglichst gute horizontale Verwischung der Artefakte zu ermöglichen, auch wenn dies möglicherweise mit einem erhöhten Auslegungsaufwand einhergeht. Die Fernfeldverteilung 72b der Fig. 8b zeigt jedoch gegenüber der Fernfeldverteilung 72b der Fig. 8a Vorteile durch eine erhöhte Anzahl von Positionen jeweils schwächerer Teilartefakte.

Während die Fig. 8a eine kanalweise alternierende Anordnung der Knicke in den Lensletberandungen zeigt, zeigt Fig. 8b eine alternierende Anordnung mit variablem horizontalen Abstand zwischen oberem und unterem Knick in der Berandung eines jeden Lenslets.

Um Sprünge im Ausgangs- beziehungsweise Projektorarray zu minimieren, kann die Richtung der Verschiebung benachbarter Spalten ebenfalls alternieren, da sich so die Dezentrierungen der Projektervertices kompensieren lassen und sich ein nahezu sprungloses Profil erreichen lassen kann. Der Übergang zwischen Lensletspalten, welche die Schulter abbilden und denen, die nur die äußeren Bereiche beleuchten, kann dabei fließend ausgestaltet sein. Das bedeutet, zusätzlich zu den in Fig. 6 dargestellten Spalten eines zentralen Bereichs können noch zusätzliche Spalten vorgesehen sein. Während in [2] unterschiedliche Arrays aneinandergefügt werden, kann insofern ein einheitliches Array für die vorliegende Erfindung bereitgestellt werden, bei dem von mehreren, insbesondere mehreren zehn Spalten bis zu einer Anzahl von mehr als 50, mehr als 70, mehr als 80 oder mehr als 100 Spalten einige, beispielsweise circa ein Drittel, dem mittleren Bereich zuzuordnen sind. Gemäß einem Ausführungsbeispiel kann das Array in etwa 130 Spalten aufweisen, wovon dem mittleren Bereich circa 20 bis 25 Spalten und/oder ein Anteil von zumindest 10 % und höchstens 30 % oder von zumindest 15 % und höchstens 25 % oder in etwa 20 % zugeordnet werden können. Das Gesamtarray kann so ausgestaltet sein, dass im mittleren Bereich nur ein Teil der Lenslets den Schulter-Ellenbogenbereich abbildet und so Streulichtartefakte der Stoßstellen zwischen den unterschiedlichen Arrayregionen gegenüber dem bekannten Ansatz aus [2] vermieden wird.

Das Kondensorlinsenarray kann ähnlich zu den Ausgestaltungen aus [2] einen ersten, zweiten und dritten Kondensorlinsenbereich aufweisen, wobei der zweite Kondensorlinsenbereich zwischen dem ersten und dem dritten Kondensorlinsenarraybereich angeordnet ist, etwa als mittlerer Bereich, und eine Spalte mit angepassten schrägen Kanten umfasst. In einem Übergangsbereich zu den äußeren Bereichen oder zumindest einem hiervon, kann lediglich ein Teil der Kondensorlinsen die schräg verlaufende Hell-Dunkel-Kante abbilden, etwa um den vorerwähnten fließenden Übergang zu ermöglichen.

Ausführungsbeispiele ermöglichen die Implementierung des Kondensorlinsenarrays und des Projektionslinsenarrays als monolithisches irreguläres Tandemarray. Möglicherweise aber nicht notwendigerweise ist das Kondensorlinsenarray so ausgestaltet, dass Spalten identischer Spaltenbreite und Zeilen individuell unterschiedlicher Zeilenhöhe implementiert sind und die Kondensorlinsen flächenfüllend angeordnet sind und insbesondere eine Matrixanordnung in Zeilen und Spalten aufweisen, was eine einfache Herstellung ermöglicht. In einer anderen Ausgestaltung kann das Kondensorlinsenarray Spalten identischer Spaltenbreite und Zeilen mit spaltenweise individuell variierender Zeilenhöhe aufweisen, in welchen die Kondensorlinsen angeordnet sind. Dies mag zwar mit einer komplexeren Herstellung einhergehen, bietet dafür aber den Vorteil, dass zu einem äußeren Bereich, also mit steigendem Abstand zu einer zentralen Achse, eine verringerte Helligkeit ausgeglichen werden kann, indem die Verteilung der Kondensorlinsen entsprechend angepasst wird.

Gemäß einem Ausführungsbeispiel können Kondensorlinsen, zumindest solche mit schräg verlaufender Berandungskante, als dezentrierte Kondensorlinsen gebildet sein. Alternativ oder zusätzlich kann das Projektionslinsensarray zumindest eine entlang der Transversalrichtung y dezentrierte Projektionslinse umfassen. Projektionslinsen des Projektionslinsensarrays können mit einem größeren Pitch entlang der Transversalrichtung x angeordnet sein als Kondensorlinsen des Kondensorlinsenarrays. Entlang der Transversalrichtung y kann der Pitch dabei übereinstimmend gebildet sein.

Ausführungsbeispiele der vorliegenden Erfindung beziehen sich auf eine Aberrationskorrektur und/oder Streulichtminimierung. Um scharfe Abbildungen mit der Lichtquelle in die Ausgangslenslets (Köhler-Beleuchtung) sowie der Aperturen der Eingangslenslets durch die Ausgangslenslets nach unendlich zu erreichen, können die Brennweiten der Lenslets in horizontaler und vertikaler Richtung variieren, etwa indem anamorphotische Lenslets vorgesehen sind. Alternativ oder zusätzlich kann nicht nur innerhalb eines Lenslets eine Variation implementiert werden, sondern auch über das Array. Durch die unterschiedlichen Aperturen der Eingangslenslets können Sprünge im Höhenprofil benachbarter Lenslets auftreten. Diese Sprünge können als Störflanken Licht unerwünscht brechen und/oder streuen und so lokalisierte Störlichtartefakte in der Ausgangsverteilung verursachen. Ausführungsbeispiel sehen deshalb eine Angleichung der Höhenprofile vor, wobei entsprechende Designregeln zur Erzielung möglichst glatter Profile in [5] aufgelistet sind. Um Sprungkanten und somit Störlicht zu vermeiden, sollten die benachbarten Lensletspalten möglichst ähnlich sein. Da sich die Zielverteilung langsam und kontinuierlich ändert, sind die Unterschiede zwischen benachbarten Spalten gering, wodurch auch die auftretenden Sprünge gering ausfallen können.

Ein weiteres Mittel zur Minimierung verbleibender Sprungkanten ist eine geringfügige Verschiebung der Scheitel der Eingangslenslets in z-Richtung, so dass Sprünge im Höhenprofil weitestgehend verschwinden. Dies so verursachte Defokussierung in Beleuchtungs- und Abbildungsstrahlengang kann prinzipiell durch kanalweise angepasste Brennweiten der Lenslets zum Teil kompensiert werden, ist aber möglicherweise auch vernachlässigbar klein, so dass eine derartige Anpassung nicht erforderlich ist.

Zurückkommend auf die Darstellung der Fig. 3a können vorliegende Ausführungsbeispiele so ausgeführt sein, dass Kondensorlinsen des Kondensorlinsenarrays zueinander entlang einer Lichtausbreitungsrichtung (z) versetzt zueinander angeordnet sind und deren Position bezüglich eines Höhenprofils angeglichen sind.

Gemäß einem Ausführungsbeispiel können Kondensorlinsen kanalweise an die versetzt zueinander angeordnete Position angepasste Brennweiten aufweisen, um eine individuelle Defokussierung zumindest teilweise zu kompensieren.

Gemäß einem Ausführungsbeispiel können unabhängig, aber auch im Zusammenspiel mit den Kondensorlinsen Projektionslinsen des Projektionslinsenarrays zueinander entlang der Lichtausbreitungsrichtung versetzt zueinander angeordnet sein und eine Position bezüglich eines Höhenprofils angeglichen sein.

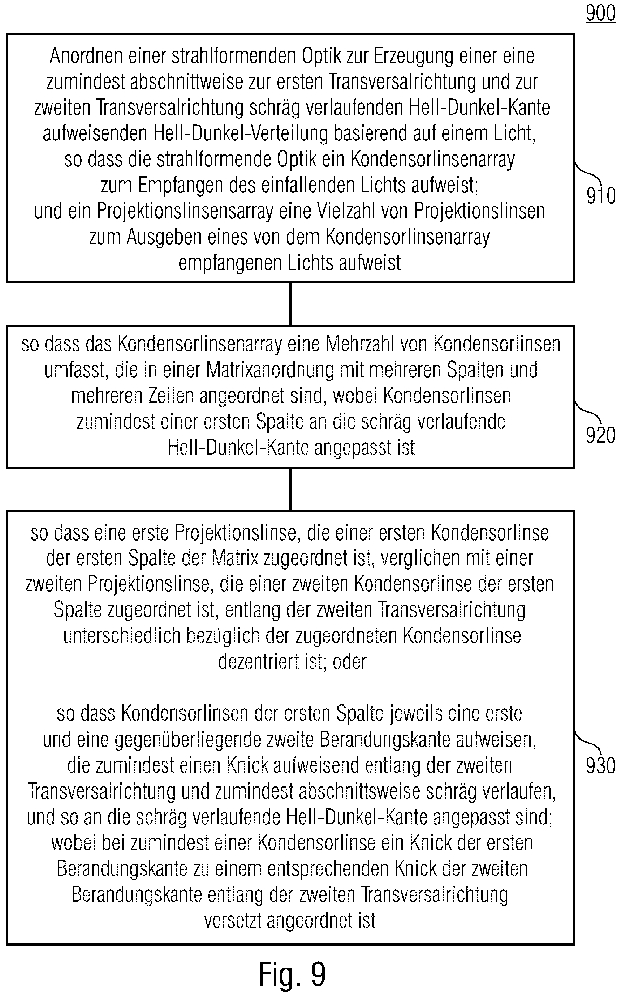

Fig. 9 zeigt ein schematisches Flussdiagramm eines Verfahrens 900, das verwendet werden kann, um einen hierin beschriebenen Abblendlichtscheinwerfer herzustellen. Ein Schritt 910 umfasst ein Anordnen einer strahlformenden Optik zur Erzeugung einer eine zumindest abschnittweise zur ersten Transversalrichtung und zur zweiten Transversalrichtung schräg verlaufenden Hell-Dunkel-Kante aufweisenden Hell-Dunkel-Verteilung basierend auf einem Licht, so dass die strahlformende Optik ein Kondensorlinsenarray zum Empfangen des einfallenden Lichts aufweist und ein Projektionslinsensarray eine Vielzahl von Projektionslinsen zum Ausgeben eines von dem Kondensorlinsenarray empfangenen Lichts aufweist. Das Licht ist entlang einer ersten Transversalrichtung möglicherweise mehr oder weniger divergent ist als in einer zu der ersten Transversalrichtung senkrechten zweiten Transversalrichtung.

Eine Randbedingung 920 für das Verfahren ist, dass das Kondensorlinsenarray eine Mehrzahl von Kondensorlinsen umfasst, die in einer Matrixanordnung mit mehreren Spalten und mehreren Zeilen angeordnet sind, wobei Kondensorlinsen zumindest einer ersten Spalte an die schräg verlaufende Hell-Dunkel-Kante angepasst sind. Eine Randbedingung 930 ist, dass eine erste Projektionslinse, die einer ersten Kondensorlinse der ersten Spalte der Matrix zugeordnet ist, verglichen mit einer zweiten Projektionslinse, die einer zweiten Kondensorlinse der ersten Spalte zugeordnet ist, entlang der zweiten Transversalrichtung unterschiedlich bezüglich der zugeordneten Kondensorlinse dezentriert ist; und/oder, dass Kondensorlinsen der ersten Spalte jeweils eine erste und eine gegenüberliegende zweite Berandungskante aufweisen, die zumindest einen Knick aufweisend entlang der zweiten Transversalrichtung und zumindest abschnittsweise schräg verlaufen, und so an die schräg verlaufende Hell-Dunkel-Kante angepasst sind, wobei bei zumindest einer Kondensorlinse ein Knick der ersten Berandungskante zu einem entsprechenden Knick der zweiten Berandungskante entlang der zweiten Transversalrichtung versetzt angeordnet ist. Dies geht bevorzug damit einher, dass entlang der Transversalrichtung x eine individuelle Dezentrierung der Projektionslinsen gegenüber der jeweils zugeordneten Kondensorlinse vorgesehen ist. Ausführungsbeispiele der vorliegenden Erfindung ermöglichen den teilweisen oder völligen Verzicht auf Masken, womit das System eine sehr hohe Transmission aufweisen kann.

Zudem entfällt möglicherweise ein Produktionsschritt, da keine vergrabenen Masken und Strahlformer verwirklicht werden müssen. Durch den Wegfall der absorbierenden Masken kann zudem der Wärmeeintrag ins Element reduziert werden, was die Lebensdauer erhöhen kann. Der Verzicht auf die Dreiteilung des Strahlformers wie in [4] kann verringert werden und erlaubt eine bessere Kontrolle der waagerechten Fernfeldverteilung in den Außenbereichen, sowie Wegfall von Streulichtartefakten, die von den Stoßstellen zwischen den drei Bereichen herrühren. Ausführungsbeispiele können beispielsweise im Kfz-Abblendlicht zur Erzeugung beliebiger Fernfeldversteilung bei Scheinwerfern angeordnet werden.

Ein spezifisches Ausführungsbeispiel der vorliegenden Erfindung besteht in einem Abblendlichtscheinwerfer mit einer eine Lichtquelle aufweisenden anamorphotischen kollimierten Lichtquellenanordnung, die entlang einer zweiten Transversalrichtung eine größere Divergenz aufweist als entlang einer senkrecht hierzu angeordneten ersten Transversalrichtung. Der Abblendlichtscheinwerfer umfasst einen blendenfreien mikrooptischen Strahlformer, umfassend ein erstes Kondensorlinsenarray mit in Spalten identischer Breite und Zeilen individuell unterschiedlicher Höhe flächenfüllend angeordneten Kondensorlinsen, wobei die Kondensorlinsen zumindest teilweise als entlang der ersten Transversalrichtung dezentrierte Linsensegmente gebildet sind. Ferner ist ein entlang einer Lichtausbreitungsrichtung danach angeordnetes zweites Projektionslinsensarray vorgesehen, das zumindest teilweise dezentrierte Projektionslinsen umfasst, und das einen größeren Pitch entlang der zweiten Transversalrichtung aufweist als das Kondensorlinsenarray und einen gleichen Pitch entlang der ersten Transversalrichtung, wobei jede Kondensorlinse die Lichtquelle in eine ihr zugeordnete Projektionslinse abbildet und jede Projektionslinse die zugeordnete Kondensorlinse nach unendlich abbildet, und so eine Fernfeldverteilung des Abblendlichts formt. Eine Strahlformung des Strahlformers entlang der zweiten Transversalrichtung ergibt sich zumindest teilweise aus einem Zusammenspiel einer Divergenzverteilung der kollimierten Lichtquellenanordnung entlang der zweiten Transversalrichtung und der Strahlformung der Linsenarrays entlang der zweiten Transversalrichtung. Kondensorlinsen sind in einem mittleren Bereich des Kondensorlinsenarrays zur Erzeugung einer Ellenbogen-Schulterkontur einer Hell-Dunkel-Grenze in der Fernfeldverteilung mit einem entsprechenden Knick in entlang der ersten Transversalrichtung gegenüberliegenden Berandungen ausgestattet. Die Positionen der Knicks entlang der zweiten Transversalrichtung sind für zumindest eine Teilmenge der Kondensorlinsen einer Kondensorlinsenarrayspalte unterschiedlich und die zugeordneten Projektionslinsen umfassen Linsensegmente mit unterschiedlicher Dezentrierung entlang der zweiten Transversalrichtung.

Ausgehend von dem in [2] genutzten Optikschema wird erfindungsgemäß ein Abblendlicht bereitgestellt, das vollständig blendenfrei ausgestaltet werden kann und welches auf die Dreiteilung des Strahlformers und die Auslegung der äußeren Segmente als Zylinderlinsen-WaKos verzichtet. Vorteile dieses Systems gegenüber den Konzepten aus [1] und [2] sind unter anderem: eine verbesserte Kontrolle der horizontalen Intensitätsverteilung in den links und rechts außen liegenden Bereichen mittels Strahlformung durch den irregulären WaKo im Zusammenspiel mit der horizontalen Fernfeldverteilung der Quelle und verbesserte Störlichtunterdrückung.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Literatur

[1] F. Bauer, G. Böhm, "Mikroprojektions-Lichtmodul für einen Kraftfahrzeugscheinwerfer", AT 514967 B1.
[2] P. Schreiber, C. Li, D. Michaelis, C. Wächter, S. Fischer: "Abblendlichtscheinwerfer", DE 10 2018 217 215 A1
[3] C. Li, P. Schreiber, D. Michaelis, Ch. Wächter, St. Fischer, U. D. Zeitner: "Etendue conserving light shaping using microlens arrays with irregular lenslets", SPIE 10693 (2018) 1069304.
[4] C. Li, P. Schreiber, D. Michaelis, C. Wächter, S. Fischer: "Optischer Strahlformer", DE 10 2017 217 345 B4
[5] P. Schreiber, L. Wilhelm, "Light shaping with micro-optical irregular fly's eye condensers",
   Proc. SPIE Vol. 12078, IODC 2021, 1207813 (19. Nov. 2021); doi: 10.1117/12.2603648.

## Patentansprüche

1. Strahlformende Optik (42) zur Erzeugung einer eine zumindest abschnittsweise zu einer vertikalen ersten Transversalrichtung (y) und einer senkrecht hierzu angeordneten horizontalen zweiten Transversalrichtung (x) schräg verlaufende Hell-DunkelKante (26) aufweisenden Hell-Dunkel-Verteilung basierend auf einem einfallenden Licht, wobei die Strahlformende Optik (42) folgendes umfasst:
ein Kondensorlinsenarray (44) zum Empfangen des einfallenden Lichts; und ein Projektionslinsenarray (46) mit einer Vielzahl von Projektionslinsen (52) zum Ausgeben eines von dem Kondensorlinsenarray (44) empfangenen Lichts aufweist;
wobei das Kondensorlinsenarray (44) eine Mehrzahl von Kondensorlinsen (48) umfasst, die in einer Matrixanordnung mit mehreren Spalten und mehreren Zeilen angeordnet sind, wobei Kondensorlinsen (48) zumindest einer ersten Spalte an die schräg verlaufende Hell-Dunkel-Kante (26) angepasst sind;
wobei eine erste Projektionslinse, die einer ersten Kondensorlinse der ersten Spalte der Matrix zugeordnet ist, verglichen mit einer zweiten Projektionslinse, die einer zweiten Kondensorlinse der ersten Spalte zugeordnet ist, entlang der zweiten Transversalrichtung (x) unterschiedlich bezüglich der zugeordneten Kondensorlinse dezentriert ist.

2. Abblendlichtscheinwerfer mit: einer strahlformenden Optik (42) gemäß Anspruch 1.

3. Abblendlichtscheinwerfer gemäß Anspruch 2 , bei dem die Kondensorlinsen (48) der ersten Spalte eine entlang der ersten und zweiten Transversalrichtung (x) zumindest abschnittsweise schräg verlaufende Berandungskante aufweisen, die an die schräg verlaufende Hell-Dunkel-Kante (26) angepasst ist.

4. Abblendlichtscheinwerfer gemäß Anspruch 3, bei dem die Kondensorlinsen (48) der ersten Spalte jeweils eine erste und eine gegenüberliegende zweite Berandungskante aufweisen, die entlang der ersten und zweiten Transversalrichtung (y,x) zumindest abschnittsweise schräg verlaufen, und die an die schräg verlaufende Hell-Dunkel-Kante (26) angepasst sind.

5. Abblendlichtscheinwerfer gemäß Anspruch 4, bei dem ein schräger Abschnitt (48SO) der ersten Berandungskante gegenüber einem schrägen Abschnitt (48SU) der zweiten Berandungskante entlang der zweiten Transversalrichtung (x) verschoben angeordnet ist.

6. Abblendlichtscheinwerfer gemäß einem der Ansprüche 2 bis 5, bei dem Kondensorlinsen (48) der ersten Spalte jeweils eine erste und eine gegenüberliegende zweite Berandungskante aufweisen, die zumindest einen Knick aufweisend entlang der ersten und zweiten Transversalrichtung (y, x) und zumindest abschnittsweise schräg verlaufen, und so an die schräg verlaufende Hell-Dunkel-Kante (26) angepasst sind;
wobei bei zumindest einer Kondensorlinse ein Knick der ersten Berandungskante zu einem entsprechendem Knick der zweiten Berandungskante entlang der zweiten Transversalrichtung (x) versetzt angeordnet ist.

7. Abblendlichtscheinwerfer gemäß dem Anspruch 6, bei dem ein Vertex (48V) einer der Kondensorlinse (48) zugeordneten Projektionslinse (52) gegenüber einem Vertex (52V) der Projektionslinse (52) individuell entlang der zweiten Transversalrichtung (x) dezentriert ist.

8. Abblendlichtscheinwerfer gemäß einem der Ansprüche 6 bis 7, eine unterschiedliche Dezentrierung der ersten Projektionslinse, verglichen mit der zweiten Projektionslinse entlang der zweiten Transversalrichtung (x) an eine Verschiebung der Berandungskanten entlang der zweiten Transversalrichtung (x) angepasst ist und eine durch die die Verschiebung der Berandungskanten verursachte Verschiebung der Hell-Dunkel-Kante (26) in der Hell-Dunkel-Verteilung zumindest teilweise kompensiert.

9. Abblendlichtscheinwerfer gemäß einem der Ansprüche 2 bis 8, wobei eine Verschiebung von Projektionslinsenvertices (52V) gegenüber einem Kondensorlinsenvertex (48V) einer jeweils der Projektionslinse (52) zugeordneten Kondensorlinse (48) entlang der ersten Transversalrichtung (y) zeilenabhängig und spaltenunabhängig ist; und entlang der zweiten Transversalrichtung (x) zeilenunabhängig und spaltenabhängig ist.

10. Abblendlichtscheinwerfer gemäß einem der Ansprüche 2 bis 9, bei dem Kondensorlinsen (48) einer Mehrzahl von Spalten des Kondensorlinsenarrays (44) an die schräg verlaufende Hell-Dunkel-Kante (26) angepasst ist; wobei die Mehrzahl von Spalten einen mittig angeordneten Bereich des Kondensorlinsenarrays (44) bildet.

11. Abblendlichtscheinwerfer gemäß einem der Ansprüche 2 bis 10, bei dem das Kondensorlinsenarray (44) einen ersten, einen zweiten und einen dritten Kondensorlinsenarraybereich aufweist, wobei der zweite Kondensorlinsenarraybereich zwischen dem ersten und dem dritten Kondensorlinsenarraybereich angeordnet ist und die erste Spalte umfasst, wobei in einem Übergangsbereich von dem zweiten Kondensorlinsenarraybereich einerseits und dem ersten oder dritten Kondensorlinsenarraybereich andererseits nur ein Teil der Kondensorlinsen (48) die schräg verlaufende Hell-Dunkel-Kante (26) abbildet.

12. Abblendlichtscheinwerfer gemäß einem der Ansprüche 2 bis 11, mit einer Lichtquellenanordnung (28) zur Erzeugung eines Lichtkegels (32) aus Licht, um das einfallende Licht für die strahlformende Optik bereitzustellen.

13. Abblendlichtscheinwerfer gemäß Anspruch 12, bei dem Kondensorlinsenarray (44) angeordnet ist, um die Lichtquellenanordnung (28) scharf in das Projektionslinsenarray (46) abzubilden, um eine Köhler'sche Beleuchtung bereitzustellen.

14. Abblendlichtscheinwerfer gemäß einem der Ansprüche 2 bis 13, bei dem zumindest die erste Spalte entlang der ersten Transversalrichtung (y) dezentrierte Kondensorlinsen (48) umfasst; oder
bei dem das Projektionslinsenarray (46) zumindest eine entlang der ersten Transversalrichtung (y) dezentrierte Projektionslinse umfasst.

15. Abblendlichtscheinwerfer,
entweder mit einer Lichtquellenanordnung (28) zur Erzeugung eines Lichtkegels (32) aus Licht, das in einer ersten Transversalrichtung (y) weniger divergent ist als in einer zu der ersten Transversalrichtung (y) senkrechten zweiten Transversalrichtung (x);
einer strahlformenden Optik (42) zur Erzeugung einer eine zumindest abschnittsweise zur ersten Transversalrichtung (y) und zur zweiten Transversalrichtung (x) schräg verlaufenden Hell-Dunkel-Kante (26) aufweisenden Hell-Dunkel-Verteilung basierend auf dem Licht, wobei die strahlformende Optik (42) ein Kondensorlinsenarray (44) zum Empfangen des einfallenden Lichts; und ein Projektionslinsenarray (46) mit einer Vielzahl von Projektionslinsen (52) zum Ausgeben eines von dem Kondensorlinsenarray (44) empfangenen Lichts aufweist;
wobei das Kondensorlinsenarray (44) eine Mehrzahl von Kondensorlinsen (48) umfasst, die in einer Matrixanordnung mit mehreren Spalten und mehreren Zeilen angeordnet sind, wobei Kondensorlinsen (48) zumindest einer ersten Spalte an die schräg verlaufende Hell-Dunkel-Kante (26) angepasst ist;
wobei Kondensorlinsen (48) der ersten Spalte jeweils eine erste und eine gegenüberliegende zweite Berandungskante aufweisen, die zumindest einen Knick aufweisend entlang der ersten und zweiten Transversalrichtung (y, x) und zumindest abschnittsweise schräg verlaufen, und so an die schräg verlaufende Hell-Dunkel-Kante (26) angepasst sind; wobei bei zumindest einer Kondensorlinse ein Knick der ersten Berandungskante zu einem entsprechendem Knick der zweiten Berandungskante entlang der zweiten Transversalrichtung (x) versetzt angeordnet ist; oder mit
einer eine Lichtquelle aufweisenden anamorphotisch kollimierten Lichtquellenanordnung (28), die entlang einer zweiten Transversaltrichtung eine größere Divergenz aufweist als entlang einer senkrecht hierzu angeordneten ersten Transversalrichtung (y),
einem blendenfreien mikrooptischen Strahlformer, umfassend ein erstes Kondensorlinsenarray (44) mit in Spalten identischer Breite und Zeilen individuell unterschiedlicher Höhe flächenfüllend angeordneten Kondensorlinsen (48), wobei die Kondensorlinsen (48) zumindest teilweise als entlang der ersten Transversalrichtung (y) dezentrierte Linsensegmente gebildet sind; und einem entlang einer Lichtausbreitungsrichtung danach angeordneten, zweiten Projektionslinsenarray (46), das zumindest teilweise dezentrierte Projektionslinsen (52) umfasst, und das einen größeren Pitch entlang der zweiten Transversalrichtung (x) aufweist als das Kondensorlinsenarray (44) und einen gleichen Pitch entlang der ersten Transversalrichtung (y), wobei jede Kondensorlinse die Lichtquelle in eine ihr zugeordnete Projektionslinse abbildet und jede Projektionslinse die zugeordnete Kondensorlinse nach Unendlich abbildet; und so eine Fernfeldverteilung des Abblendlichts formt;
wobei eine Strahlformung des Strahlformers entlang der zweiten Transversalrichtung (x) sich zumindest teilweise aus einem Zusammenspiel einer Divergenzverteilung der kollimierten Lichtquellenanordnung (28) entlang der zweiten Transversalrichtung (x) und der Strahlformung der Linsenarrays entlang der zweiten Transversalrichtung (x) ergibt;
wobei Kondensorlinsen (48) in einem mittleren Bereich des Kondensorlinsenarrays (44) zur Erzeugung einer Ellbogen-Schulterkontur einer Hell-Dunkelgrenze in der Fernfeldverteilung einen dementsprechenden Knick in entlang der ersten Transversalrichtung (y) gegenüberliegenden Berandungen aufweisen; und die Positionen der Knicks entlang der zweiten Transversalrichtung (x) für zumindest eine Teilmenge der Kondensorlinsen (48) einer Kondensorlinsenarrayspalte unterschiedlich sind und die zugeordneten Projektionslinsen (52) Linsensegmente mit unterschiedlicher Dezentrierung entlang der zweiten Transversalrichtung (x) umfassen.

## Claims

1. Beamforming optics (42) for generating, on the basis of incident light, a light/dark distribution comprising a light/dark edge (26) extending obliquely at least in portions with respect to a vertical first transverse direction (y) and a horizontal second transverse direction (x) perpendicular thereto, the beamforming optics (42) comprising:
a condenser lens array (44) for receiving incident light; and a projection lens array (46) with a multitude of projection lenses (52) for outputting light received by the condenser lens array (44);
wherein the condenser lens array (44) includes a plurality of condenser lenses (48) arranged in a matrix arrangement with several columns and several lines, wherein condenser lenses (48) of at least a first column are adapted to the obliquely-extending light/dark edge (26);
wherein, compared to a second projection lens assigned to a second condenser lens of the first column, a first projection lens assigned to a first condenser lens of the first column of the matrix is decentered differently with respect to the assigned condenser lens along the second transverse direction (x).

2. Low-beam headlight comprising:
beamforming optics (42) according to claim 1.

3. Low-beam headlight according to claim 2, wherein the condenser lenses (48) of the first column comprise a boundary edge extending obliquely along the first and the second transverse direction (x) at least in portions, adapted to the obliquely-extending light/dark edge (26).

4. Low-beam headlight according to claim 3, wherein the condenser lenses (48) of the first column comprise a first and an opposite second boundary edge, each extending obliquely along the first and second transversal direction (y, x) at least in portions and adapted to the obliquely-extending light/dark edge (26).

5. Low-beam headlight according to claim 4, wherein an oblique portion (48SO) of the first boundary edge is arranged so as to be displaced with respect to an oblique portion (48SU) of the second boundary edge along the second transverse direction (x).

6. Low-beam headlight according to any of claims 2 to 5, wherein condenser lenses (48) of the first column each comprise a first and an opposite second boundary edge extending along the first and second transverse directions (y, x) and comprising at least one bend and extending obliquely at least in portions, and adapted to the obliquely-extending light/dark edge (26) in such a way;
wherein, in at least one condenser lens, a bend of the first boundary edge is arranged so as to be offset with respect to a corresponding bend of the second boundary edge along the second transverse direction (x).

7. Low-beam headlight according to claim 6, wherein a vertex (48V) of a projection lens (52) assigned to the condenser lens (48) is decentered individually with respect to a vertex (52V) of the projection lens (52) along the second transverse direction (x).

8. Low-beam headlight according to any of claims 6 to 7, wherein a different decentered arrangement of the first projection lens, compared to the second projection lens, along the second transverse direction (x), is adapted to a displacement of the boundary edges along the second transverse direction (x) and at least partially compensates for a displacement of the light/dark edge (26) in the light/dark distribution caused by the displacement of the boundary edges.

9. Low-beam headlight according to any of claims 2 to 8, wherein a displacement of projection lens vertices (52V) with respect to a condenser lens vertex (48V) of a condenser lens (48) respectively assigned to the projection lens (52) is linedependent and column-independent along the first transverse direction (y) and lineindependent and column-dependent along the second transverse direction (x).

10. Low-beam headlight according to any of claims 2 to 9, wherein condenser lenses (48) of a plurality of columns of the condenser lens array (44) are adapted to the obliquely-extending light/dark edge (26); wherein the plurality of columns forms a centrally arranged area of the condenser lens array (44).

11. Low-beam headlight according to any of claims 2 to 10, wherein the condenser lens array (44) comprises a first, a second, and a third condenser lens array area, wherein the second condenser lens array area is arranged between the first and third condenser lens array areas and includes the first column, wherein only part of the condenser lenses (48) images the obliquely-extending light/dark edge (26) in a transition area from the second condenser lens array area, on the one hand, and the first or third condenser lens array area, on the other hand.

12. Low-beam headlight according to any of claims 2 to 11, comprising a light source arrangement (28) for generating a light cone (32) consisting of light so as to provide the incident light for the beamforming optics.

13. Low-beam headlight according to claim 12, wherein the condenser lens array (44) is arranged so as to sharply image the light source arrangement (28) into the projection lens array (46) in order to provide a Köhler illumination.

14. Low-beam headlight according to any of claims 2 to 13, wherein at least the first column includes decentered condenser lenses (48) along the first transverse direction (y); or
wherein the projection lens array (46) includes at least one projection lens decentered along the first transverse direction (y).

15. Low-beam headlight, comprising either:
a light source arrangement (28) for generating a light cone (32) consisting of light that is less divergent in a first transverse direction (y) than in a second transverse direction (x) perpendicular to the first transverse direction (y);
beamforming optics (42) for generating, on the basis of light, a light/dark distribution comprising a light/dark edge (26) extending obliquely at least in portions with respect to the first transverse direction (y) and the second transverse direction (x), wherein the beamforming optics (42) comprises a condenser lens array (44) for receiving incident light; and a projection lens array (46) with a multitude of projection lenses (52) for outputting light received by the condenser lens array (44);
wherein the condenser lens array (44) includes a plurality of condenser lenses (48) arranged in a matrix arrangement with several columns and several lines, wherein condenser lenses (48) of at least a first column are adapted to the obliquely-extending light/dark edge (26);
wherein condenser lenses (48) of the first column each comprise a first and an opposite second boundary edge extending along the first and second transverse directions (y, x) and comprising at least one bend and extending obliquely at least in portions, adapted to the obliquely-extending light/dark edge (26) in such a way; wherein, in at least one condenser lens, a bend of the first boundary edge is arranged so as to be offset with respect to a corresponding bend of the second boundary edge along the second transverse direction (x); or
an anamorphic collimated light source arrangement (28) comprising a light source with a lager divergence along a second transverse direction than along a first transverse direction (y) perpendicular thereto;
a micro-optical beamformer without diaphragms, including a first condenser lens array (44) with condenser lenses (48) arranged in columns of identical width and rows of individually different height so as to fill the area, the condenser lenses (48) being formed at least partially as lens segments decentered along the first transverse direction (y); and a second projection lens array (46) arranged behind the same along a light propagation direction, including at least partially decentered projection lenses (52), and comprising a greater pitch along the second transverse direction (x) than the condenser lens array (44) and an equal pitch along the first transverse direction (y), wherein each condenser lens images the light source into a projection lens assigned thereto, and each projection lens images the assigned condenser lens towards infinity; and thus forms a far-field distribution of the low-beam;
wherein beamforming of the beamformer along the second transverse direction (x) results at least in part from an interaction of a divergence distribution of the collimated light source arrangement (28) along the second transverse direction (x) and the beamforming of the lens arrays along the second transverse direction (x);
wherein condenser lenses (48) are equipped with a corresponding bend in boundaries opposite along the first transverse direction (y) in a central area of the condenser lens array (44) to generate an elbow-shoulder contour of a light/dark border in the far-field distribution; and the positions of the bends along the second transverse direction (x) are different for at least a subset of the condenser lenses (48) of a condenser lens array column, and the assigned projection lenses (52) include lens segments with different decentered arrangements along the second transverse direction (x).

## Revendications

1. Optique de mise en forme du faisceau (42) destinée à générer une répartition clair-obscur comprenant une ligne de coupure (26) s'étendant obliquement, au moins en partie, par rapport à une première direction transversale verticale (y) et à une deuxième direction transversale horizontale (x) perpendiculaire à celle-ci, à partir d'une lumière incidente, dans laquelle l'optique de mise en forme du faisceau (42) inclut :
un réseau de lentilles condensatrices (44) destiné à recevoir la lumière incidente ; et un réseau de lentilles de projection (46) comprenant une multitude de lentilles de projection (52) destinées à délivrer une lumière reçue par le réseau de lentilles condensatrices (44) ;
dans laquelle le réseau de lentilles condensatrices (44) inclut une pluralité de lentilles condensatrices (48) disposées selon un agencement matriciel avec plusieurs colonnes et plusieurs lignes, dans laquelle les lentilles condensatrices (48) d'au moins une première colonne sont adaptées à la ligne de coupure oblique (26) ;
dans laquelle une première lentille de projection associée à une première lentille condensatrice de la première colonne de la matrice présente est décentrée différemment d'une deuxième lentille de projection associée à une deuxième lentille condensatrice de la première colonne, le long de la deuxième direction transversale (x), par rapport à la lentille condensatrice qui lui est associée.

2. Projecteur de croisement comprenant :
une optique de mise en forme du faisceau (42) selon la revendication 1.

3. Projecteur de croisement selon la revendication 2, dans lequel les lentilles condensatrices (48) de la première colonne comprennent un bord de délimitation s'étendant obliquement, au moins en partie, par rapport aux première et deuxième directions transversales (y, x), lequel est adapté à la ligne de coupure (26) s'étendant obliquement.

4. Projecteur de croisement selon la revendication 3, dans lequel les lentilles condensatrices (48) de la première colonne comprennent chacune un premier bord de délimitation et un deuxième bord de délimitation opposé, qui s'étendent obliquement, au moins en partie, le long des première et deuxième directions transversales (y, x), et qui sont adaptés à la ligne de coupure (26) s'étendant obliquement.

5. Projecteur de croisement selon la revendication 4, dans lequel une partie oblique (48SO) du premier bord de délimitation est disposée de manière décalée par rapport à une partie oblique (48SU) du deuxième bord de délimitation, le long de la deuxième direction transversale (x).

6. Projecteur de croisement selon l'une des revendications 2 à 5, dans lequel les lentilles condensatrices (48) de la première colonne comprennent chacune un premier bord de délimitation et un deuxième bord de délimitation opposé, qui comprennent au moins un coude et s'étendent, au moins en partie, obliquement le long des première et deuxième directions transversales (y, x), et sont ainsi adaptées à la ligne de coupure (26) s'étendant obliquement ;
dans lequel, pour au moins une lentille condensatrice, un coude du premier bord de délimitation est disposé avec un décalage par rapport à un coude correspondant du deuxième bord de délimitation le long de la deuxième direction transversale (x).

7. Projecteur de croisement selon la revendication 6, dans lequel un sommet (48V) d'une lentille de projection (52) associée à la lentille condensatrice (48) est décentré individuellement le long de la deuxième direction transversale (x) par rapport à un sommet (52V) de la lentille de projection (52).

8. Projecteur de croisement selon l'une des revendications 6 à 7, dans lequel un décentrage différent de la première lentille de projection, par rapport à la deuxième lentille de projection le long de la deuxième direction transversale (x), est adapté à un décalage des bords de délimitation le long de la deuxième direction transversale (x) et compense au moins partiellement un décalage de la ligne de coupure (26) dans la répartition clair-obscur, provoqué par le décalage des bords de délimitation.

9. Projecteur de croisement selon l'une des revendications 2 à 8, dans lequel un décalage de sommets de lentilles de projection (52V) par rapport à un sommet de lentille condensatrice (48V) d'une lentille condensatrice (48) respectivement associée à la lentille de projection (52) est, le long de la première direction transversale (y), dépendant de la ligne et indépendant de la colonne ; et, le long de la deuxième direction transversale (x), est indépendant de la ligne et dépendant de la colonne.

10. Projecteur de croisement selon l'une des revendications 2 à 9, dans lequel des lentilles condensatrices (48) d'une pluralité de colonnes du réseau de lentilles condensatrices (44) sont adaptées à la ligne de coupure oblique (26) ; dans lequel la pluralité de colonnes forme une zone disposée centralement du réseau de lentilles condensatrices (44).

11. Projecteur de croisement selon l'une des revendications 2 à 10, dans lequel le réseau de lentilles condensatrices (44) comprend une première zone, une deuxième zone et une troisième zone de réseau de lentilles condensatrices, dans lequel la deuxième zone de réseau de lentilles condensatrices est disposée entre la première et la troisième zones de réseau de lentilles condensatrices et inclut la première colonne, et dans lequel, dans une zone de transition entre, d'une part, la deuxième zone de réseau de lentilles condensatrices et, d'autre part, la première ou la troisième zone de réseau de lentilles condensatrices, seule une partie des lentilles condensatrices (48) reproduit la ligne de coupure oblique (26).

12. Projecteur de croisement selon l'une des revendications 2 à 11, comprenant un agencement de sources lumineuses (28) pour générer un cône lumineux (32) de lumière, afin de fournir la lumière incidente pour l'optique de mise en forme du faisceau.

13. Projecteur de croisement selon la revendication 12, dans lequel le réseau de lentilles condensatrices (44) est disposé de manière à former une image nette de l'agencement de sources lumineuses (28) dans le réseau de lentilles de projection (46), afin de fournir un éclairage de type Köhler.

14. Projecteur de croisement selon l'une des revendications 2 à 13, dans lequel au moins la première colonne inclut des lentilles condensatrices (48) décentrées le long de la première direction transversale (y) ; ou
dans lequel le réseau de lentilles de projection (46) inclut au moins une lentille de projection décentrée le long de la première direction transversale (y).

15. Projecteur de croisement, comprenant soit
un agencement de sources lumineuses (28) destiné à générer un cône lumineux (32) de lumière qui est moins divergente dans une première direction transversale (y) que dans une deuxième direction transversale (x) perpendiculaire à la première direction transversale (y) ;
une optique de mise en forme du faisceau (42) destinée à générer, à partir de la lumière, une répartition clair-obscur comprenant une ligne de coupure (26) s'étendant, au moins en partie, obliquement par rapport à la première direction transversale (y) et à la deuxième direction transversale (x), dans laquelle l'optique de mise en forme du faisceau (42) comprend un réseau de lentilles condensatrices (44) destiné à recevoir la lumière incidente ; et un réseau de lentilles de projection (46) comprenant une multitude de lentilles de projection (52) destinées à délivrer une lumière reçue par le réseau de lentilles condensatrices (44) ;
dans laquelle le réseau de lentilles condensatrices (44) inclut une pluralité de lentilles condensatrices (48) disposées selon un agencement matriciel avec plusieurs colonnes et plusieurs lignes, et dans laquelle des lentilles condensatrices (48) d'au moins une première colonne sont adaptées à la ligne de coupure oblique (26) ;
dans laquelle les lentilles condensatrices (48) de la première colonne comprennent chacune un premier bord de délimitation et un deuxième bord de délimitation opposé, qui comprennent au moins un coude et s'étendent au moins en partie obliquement le long des première et deuxième directions transversales (y, x), et sont ainsi adaptées à la ligne de coupure (26) s'étendant obliquement ; dans lequel, pour au moins une lentille condensatrice, un coude du premier bord de délimitation est décalé par rapport à un coude correspondant du deuxième bord de délimitation le long de la deuxième direction transversale (x) ; ou comprenant
un agencement de sources lumineuses (28) à collimation anamorphotique comprenant une source lumineuse, lequel comprend une divergence plus grande le long d'une deuxième direction transversale que le long d'une première direction transversale (y) disposée perpendiculairement à celle-ci,
un dispositif de mise en forme de faisceau micro-optique sans diaphragme, incluant un premier réseau de lentilles condensatrices (44) comprenant des lentilles condensatrices (48) disposées de manière à remplir toute la surface en colonnes de largeur identique et en lignes de hauteur individuellement différente, dans lequel les lentilles condensatrices (48) sont formées au moins en partie comme des segments de lentilles décentrés le long de la première direction transversale (y) ; et un deuxième réseau de lentilles de projection (46) disposé en aval le long d'une direction de propagation de la lumière, qui inclut des lentilles de projection (52) au moins partiellement décentrées, et qui comprend un pas plus grand le long de la deuxième direction transversale (x) que le réseau de lentilles condensatrices (44) et un pas identique le long de la première direction transversale (y), dans lequel chaque lentille condensatrice forme une image de la source lumineuse dans une lentille de projection qui lui est associée et chaque lentille de projection formant une image de la lentille condensatrice associée à l'infini ; et formant ainsi une répartition en champ lointain du faisceau de croisement ;
dans lequel la mise en forme du faisceau par le dispositif de mise en forme de faisceau le long de la deuxième direction transversale (x) résulte, au moins en partie, d'une interaction entre une distribution de divergence de l'agencement de sources lumineuses collimaté (28) le long de la deuxième direction transversale (x) et la mise en forme du faisceau par les réseaux de lentilles le long de la deuxième direction transversale (x) ;
dans lequel les lentilles condensatrices (48) situées dans une zone centrale du réseau de lentilles condensatrices (44) comprennent, afin de générer un profil coude-épaule d'une ligne de coupure dans la répartition en champ lointain, un coude correspondant au niveau des bords de délimitation opposés le long de la première direction transversale (y) ; et les positions des coudes le long de la deuxième direction transversale (x) diffèrent pour au moins un sous-ensemble des lentilles condensatrices (48) d'une colonne du réseau de lentilles condensatrices, et les lentilles de projection associées (52) incluent des segments de lentille comprenant des décentrages différents le long de la deuxième direction transversale (x).
